(19) Europäisches Patentamt
European Patent Office
Office européen des brevets

(11) EP 4 256 966 A1

(12) **EUROPEAN PATENT APPLICATION**
published in accordance with Art. 153(4) EPC

(43) Date of publication:
**11.10.2023 Bulletin 2023/41**

(21) Application number: **21944253.0**

(22) Date of filing: **22.12.2021**

(51) International Patent Classification (IPC):
***A23D 7/005*** *(2006.01)* ***A23L 33/12*** *(2016.01)*

(52) Cooperative Patent Classification (CPC):
**A23D 7/005; A23L 33/12**

(86) International application number:
**PCT/JP2021/047689**

(87) International publication number:
**WO 2022/254764 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 JP 2021092538**

(71) Applicant: **Osaka Gas Co., Ltd.**
**Osaka-shi, Osaka 541-0046 (JP)**

(72) Inventors:
- **NISHIMURA, Taku**
**Osaka-shi, Osaka 541-0046 (JP)**
- **SUGIMOTO, Masayuki**
**Osaka-shi, Osaka 541-0046 (JP)**
- **TSUBOTA, Jun**
**Osaka-shi, Osaka 541-0046 (JP)**

(74) Representative: **Müller-Boré & Partner Patentanwälte PartG mbB**
**Friedenheimer Brücke 21**
**80639 München (DE)**

# (54) 3-HYDROXYBUTYRIC-ACID-CONTAINING OIL AND FAT COMPOSITION

(57) The fat and/or oil composition containing 3-hydroxybutyric acid, which comprises 3-hydroxybutyric acid and/or a salt of 3-hydroxybutyric acid, edible fat and/or oil, and a protein product, is a composition having improved water dispersibility.

EP 4 256 966 A1

## Description

### Technical Field

The present invention relates to a fat and/or oil composition containing 3-hydroxybutyric acid.

### Background Art

3-Hydroxybutyric acid (hereinafter also simply referred to as "3HB") is a substance that is originally present in the human body and is attracting attention as a breakthrough energy source that can replace carbohydrates.

For example, when a medium-chain fatty acid (MCT) contained in coconut oil etc. is ingested, 3HB is then metabolized in the body and transported through the bloodstream and converted into energy. This process can convert 3 HB into energy more quickly than metabolism of carbohydrates via glycolysis. That is, intake of 3HB from an external source achieves conversion into energy more quickly than carbohydrates via glycolysis.

Further, 3HB has an effect of inhibiting cells from absorbing fat and sugar. That is, intake of 3HB from an external source has a dieting effect of inhibiting sugar absorption and promoting fat-burning.

In addition to this, 3HB is considered to not only play a role as a mere energy source, but also have ameliorating effects on cognitive function and long-term continuous memory function, and preventive effects on Alzheimer's disease.

In view of such functions of 3HB, application of 3HB as an energy substance for athletes or diet and health foods has been studied.

On the other hand, 3HB and salts thereof (in particular, potassium salts), which have high water solubility and deliquescence, are extremely difficult to handle in a solid state, such as powder.

In addition to this, 3HB has a strong sour taste, which causes discomfort when orally ingested. In order to suppress such a strong sour taste, a method of neutralizing 3HB into a 3HB salt and using the 3HB salt can be considered. However, this method results in an excessive salt content, which is not preferable. A method of adding an anticaking agent, such as silicon dioxide, calcium silicate, or dextrin, can also be considered. However, since such compounds may have an upper intake limit or contain carbohydrates, their use in combination with 3HB is not preferable.

### Summary of Invention

### Technical Problem

Under the circumstances described above, the present inventors found that when a composition containing 3HB and a specific fat and/or oil (particularly preferably, a fat and/or oil particle containing a fat and/or oil component that is β-form fat and/or oil comprising a XXX triglyceride) is produced, the deliquescence and sour taste of 3HB can both be suppressed.

In order for the intake of 3HB from an external source to enhance the effect as 3HB, good dispersibility in water is required on the assumption that 3HB is orally ingested. However, when a composition containing 3HB and a specific fat and/or oil (particularly preferably, a fat and/or oil particle containing a fat and/or oil component that is β-form fat and/or oil comprising a XXX triglyceride) is produced as described above, the deliquescence and sour taste of 3HB can both be suppressed but the composition is poorly dispersible in water, which causes separation of the fat and/or oil from 3HB and/or water. Therefore, it was difficult to apply this composition as is to oral intake such as dietary supplementary foods (or supplements).

The present invention aims to solve the above problem. An object of the present invention is to provide a composition containing 3HB and a fat and/or oil, and having improved dispersibility in water.

### Solution to Problem

As a result of extensive research to achieve the above object, the present inventors found that when 3-hydroxybutyric acid and/or a salt thereof, edible fat and/or oil, and a protein product are incorporated, the resulting composition containing 3HB and fat and/or oil can have improved dispersibility in water. The inventors have accomplished the present invention as a result of further research based on this finding. More specifically, the present invention includes the following features.

Item 1.
A fat and/or oil composition containing 3-hydroxybutyric acid, the composition comprising 3-hydroxybutyric acid and/or a salt of 3-hydroxybutyric acid; edible fat and/or oil; and a protein product.
Item 2.

The fat and/or oil composition containing 3-hydroxybutyric acid according to Item 1, wherein the edible fat and/or oil is a fat and/or oil particle containing a fat and/or oil component comprising at least one type of XXX triglyceride having a fatty acid residue X at positions 1 to 3 of glycerin.
Item 3.
The fat and/or oil composition containing 3-hydroxybutyric acid according to Item 2, wherein the fat and/or oil component comprises β-form fat and/or oil.
Item 4.
The fat and/or oil composition containing 3-hydroxybutyric acid according to Item 2 or 3, wherein the number of carbon atoms of the fatty acid residue is an integer of 10 to 22.
Item 5.
The fat and/or oil composition containing 3-hydroxybutyric acid according to any one of Items 2 to 4, wherein the fat and/or oil particle has a plate-like shape.
Item 6.
The fat and/or oil composition containing 3-hydroxybutyric acid according to any one of Items 1 to 5, wherein the edible fat and/or oil is present in an amount of 0.5 to 200 parts by mass per 100 parts by mass of the 3-hydroxybutyric acid and/or salt of 3-hydroxybutyric acid.
Item 7.
The fat and/or oil composition containing 3-hydroxybutyric acid according to any one of Items 1 to 6, wherein the protein product is at least one member selected from the group consisting of whey protein, casein protein, soy protein, pea protein, wheat protein, egg protein, and rice protein.
Item 8.
The fat and/or oil composition containing 3-hydroxybutyric acid according to any one of Items 1 to 7, wherein the protein product is present in an amount of 30 to 2000 parts by mass per 100 parts by mass of the 3-hydroxybutyric acid and/or salt of 3-hydroxybutyric acid.
Item 9.
The fat and/or oil composition containing 3-hydroxybutyric acid according to any one of Items 1 to 8, wherein the salt of 3-hydroxybutyric acid is at least one member selected from the group consisting of alkali metal salts of 3-hydroxybutyric acid, alkaline earth metal salts of 3-hydroxybutyric acid, and ammonium salts of 3-hydroxybutyric acid.
Item 10.
The fat and/or oil composition containing 3-hydroxybutyric acid according to any one of Items 1 to 9, wherein the 3-hydroxybutyric acid and/or salt of 3-hydroxybutyric acid has a three-dimensional structure that is an R configuration.
Item 11.
The fat and/or oil composition containing 3-hydroxybutyric acid according to any one of Items 1 to 10, which is for use in oral intake.
Item 12.
The fat and/or oil composition containing 3-hydroxybutyric acid according to any one of Items 1 to 11, which is in the form of an aqueous dispersion.
Item 13.
The fat and/or oil composition containing 3-hydroxybutyric acid according to any one of Items 1 to 11, which is in the form of a solid.
Item 14.
A method for producing the fat and/or oil composition containing 3-hydroxybutyric acid of any one of Items 1 to 13, the method comprising the step of (1) mixing the 3-hydroxybutyric acid and/or salt of 3-hydroxybutyric acid, the edible fat and/or oil, and the protein product.
Item 15.
The method according to Item 14,
wherein the step (1) is performed in water and the method further comprises the step of (2) removing water from the fat and/or oil composition containing 3-hydroxybutyric acid in the form of an aqueous dispersion obtained in step (1) to isolate a solid fat and/or oil composition containing 3-hydroxybutyric acid.
Item 16.
The method according to Item 15, wherein the water is removed by freeze-drying.
Item 17.
A nutritional supplementary food comprising the fat and/or oil composition containing 3-hydroxybutyric acid of any one of Items 1 to 13.
Item 18.
A method for improving water dispersibility of a fat and/or oil composition containing 3-hydroxybutyric acid, the composition comprising 3-hydroxybutyric acid or a salt of 3-hydroxybutyric acid, the method comprising mixing the 3-hydroxybutyric acid and/or salt of 3-hydroxybutyric acid, edible fat and/or oil, and a protein product.

Advantageous Effects of Invention

According to the present invention, a composition with enhanced dispersibility in water can be provided by incorporating a protein product into a composition containing 3HB and a fat and/or oil.
In particular, unlike emulsifiers or the like, protein products have no upper limit on their content for oral intake and can be incorporated in large amounts. Therefore, it is easy to enhance the dispersibility in water. When a protein product is incorporated in such a large amount, the protein product enables protein intake simultaneously with energy intake from 3HB.
Further, when a specific fat and/or oil (particularly preferably, a fat and/or oil particle containing a fat and/or oil component that is β-form fat and/or oil comprising XXX triglyceride) is used as edible fat and/or oil, the deliquescence and sour taste of 3HB are particularly easily suppressed.

Brief Description of Drawings

Fig. 1 is a series of photographs showing the water dispersibility of Examples 1 to 5 and Comparative Example 1.
Fig. 2 is a series of photographs showing the water dispersibility of Examples 6 to 8.
Fig. 3 is a series of photographs showing the water dispersibility of Examples 9 to 12.
Fig. 4 is a series of photographs showing the water dispersibility of Examples 13 to 16.
Fig. 5 is a series of photographs showing the water dispersibility of Examples 17 to 20.
Fig. 6 is a series of photographs showing the water dispersibility of Examples 21 to 22.
Fig. 7 is a series of photographs showing the water dispersibility of Comparative Examples 2 to 10.
Fig. 8 is a series of photographs showing the appearance of the fat and/or oil compositions containing 3-hydroxybutyric acid obtained in Examples 23 to 25, 1 week after production.

Description of Embodiments

In the present specification, the terms "comprise," "contain," and "include" encompass the concepts of comprising, consisting essentially of, and consisting of.
In the present specification, a numerical range indicated by "A to B" means A or more and B or less.
Embodiments according to the present invention are described below. However, various changes in forms and details can be made without departing from the spirit and scope of the claims.

1. Fat and/or Oil Composition Containing 3-Hydroxybutyric Acid

The fat and/or oil composition containing 3-hydroxybutyric acid of the present invention contains 3-hydroxybutyric acid and/or a salt of 3-hydroxybutyric acid; edible fat and/or oil; and a protein product.

(1-1) 3-Hydroxybutyric Acid and/or Salt of 3-Hydroxybutyric Acid

3-Hydroxybutyric acid (3HB) is a compound represented by the following formula:

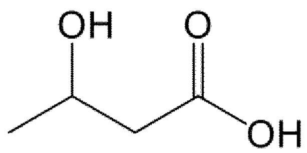

3HB can be in the form of a salt. The kind of salt of 3HB is not particularly limited. Examples include alkali metal salts (e.g., sodium salts, potassium salts, and lithium salts), alkaline earth metal salts (e.g., magnesium salts and calcium salts), ammonium salts, and the like.
3HB and salts thereof can be used singly or in a combination of two or more. From the viewpoint of avoiding excessive intake of salt, the composition preferably contains a potassium salt whose upper limit for salt intake is high. When the composition contains a potassium salt of 3HB as 3-hydroxybutyric acid and/or a salt of 3-hydroxybutyric acid, the potassium salt content can be, for example, 20 to 100 mass%, 40 to 100 mass%, 60 to 100 mass%, or 80 to 100 mass%, based on the total amount of the 3-hydroxybutyric acid and/or salt of 3-hydroxybutyric acid defined as 100 mass%.
The three-dimensional structure of the 3HB and/or salt of 3HB can be an R-configuration (R isomer) or an S-configuration (S isomer). From the viewpoint of, for example, energy into the body, water dispersibility, deliquescence suppression, and sour taste suppression, the R-configuration (R isomer) is preferred.

The 3HB and/or salt of 3HB can be in liquid form (e.g., an aqueous solution or an ethanol solution) or in solid form. The 3HB and/or salt of 3HB in solid form is particularly preferable. When the 3HB and/or salt of 3HB is in such a form, the deliquescence of the obtained composition tends to be easily suppressed. When the composition is prepared from a liquid, the remaining water or solvent in the composition is removed, for example, by using an evaporator or by freeze-drying after or during mixing, or adding seed crystals to promote crystallization, thereby enhancing the content ratio of 3HB contained in the composition.

The size of the 3HB and/or salt of 3HB is not particularly limited and can be appropriately set according to, for example, the type of salt of the 3HB salt.

The method for producing 3HB for use in the present invention is not particularly limited. 3HB can be produced by known methods. The same applies to the production of salts of 3-hydroxybutyric acid. The salts can be produced by commonly used salt formation, desalting, salt exchange, or like processes.

In the fat and/or oil composition containing 3-hydroxybutyric acid of the present invention, the content of the 3HB and/or salt of 3HB is not particularly limited. For example, when the fat and/or oil composition containing 3-hydroxybutyric acid of the present invention is a solid, the content of the 3HB and/or salt of 3HB is preferably 5 to 70 mass%, and more preferably 10 to 40 mass%, based on the total amount of the fat and/or oil composition containing 3-hydroxybutyric acid defined as 100 mass%, from the viewpoint of, for example, energy into the body, water dispersibility, deliquescence suppression, and sour taste suppression. When the fat and/or oil composition containing 3-hydroxybutyric acid of the present invention is a liquid (aqueous dispersion), the content of the 3HB and/or salt of 3HB is preferably 1 to 70 mass%, and more preferably 2 to 40 mass%, based on the total amount of the fat and/or oil composition containing 3-hydroxybutyric acid defined as 100 mass%, from the viewpoint of, for example, energy into the body, water dispersibility, deliquescence suppression, and sour taste suppression.

(1-2) Edible Fat and/or Oil

The edible fat and/or oil is not particularly limited, and various edible fat and/or oil can be used.

Examples of the edible fat and/or oil include vegetable fats and/or oils such as milk fat, shea fat, olive oil, soybean oil, safflower oil, corn oil, sunflower oil, rapeseed oil, coconut oil, palm oil, palm kernel oil, and palm fractionated oil; animal fats and/or oils such as lard and fish oil; and the like.

Examples of such edible fats and/or oils include fats and/or oils synthesized from glycerin and fatty acids, fractionated oils thereof, esterified oils thereof, hydrogenated oils thereof, and the like.

Examples of fats and/or oils synthesized from glycerin and fatty acids include medium-chain triglyceride (MCT) fats and/or oils, and the like.

Examples of fractionated oils include fractionated oils of palm olein, palm super olein, palm stearin, palm mid-fraction, and like palm oils.

Examples of transesterification oils include transesterification oils of the above-mentioned fats and/or oils or fractionated oils thereof with other liquid fats and/or oils; transesterification oils of medium-chain triglyceride (MCT) fats and/or oils with vegetable fats and/or oils; and the like.

Examples of hydrogenated oils include hydrogenated oils of the above-mentioned fats and/or oils, hydrogenated oils of fractionated oils of the fats and/or oils, hydrogenated oils of transesterification oils; and the like.

Examples of such edible fats and/or oils further include refined fats and/or oils. When refined fat and/or oil is to be used, the method for refining the fat and/or oil is not particularly limited. Examples of usable refining methods include chemical purification (chemical refining), physical purification (physical refining), and the like. Chemical purification is a method for refining a crude oil obtained by squeezing and extraction from a raw material, the method comprising subjecting the crude oil to a treatment such as degumming, deacidification, decolorization, dewaxing, or deodorization. Physical purification is a method for refining a crude oil obtained by squeezing a raw material, the method comprising subjecting the crude oil to degumming, decolorization, deacidification and/or deodorization; or like treatments.

These edible fats and/or oils can be used singly or in a combination of two or more.

These edible fats and/or oils can be in solid form or liquid form, and the form is not particularly limited.

From the viewpoint of, for example, water dispersibility, deliquescence suppression, and sour taste suppression, the edible fat and/or oil to be used is preferably a fat and/or oil particle comprising at least one type of XXX triglyceride having a fatty acid residue X at positions 1 to 3 of glycerin.

Fat and/or Oil Particle

The fat and/or oil particle is prone to particularly effectively suppress deliquescence and sour taste of 3HB, but tends to have poor water dispersibility. Even in this case, in the present invention, water dispersibility can be enhanced

by incorporating a protein product as described below.

The fat and/or oil particle is in the form of a solid. From the viewpoint of, for example, water dispersibility, deliquescence suppression, and sour taste suppression, the fat and/or oil particle is preferably in the form of a powder solid at ordinary temperature (20°C).

From the viewpoint of, for example, water dispersibility, deliquescence suppression, and sour taste suppression, the fat and/or oil particle preferably has a loose bulk density of 0.05 to 0.6 g/cm$^3$, more preferably 0.1 to 0.4 g/cm$^3$, and more preferably 0.1 to 0.3 g/cm$^3$.

The term "loose bulk density" as used herein means a packing density determined after letting a powder fall naturally. The loose bulk density (g/cm$^3$) is measured, for example, by: letting an appropriate amount of the fat and/or oil particle fall approximately 2 cm above the upper opening end of a 25-mL graduated cylinder having an inner diameter of 15 mm to loosely fill the graduated cylinder with the fat and/or oil particle; measuring the mass (g) of the fat and/or oil particle filled in the cylinder and reading the volume (mL) of the fat and/or oil particle filled in the cylinder; calculating the mass (g) of the fat and/or oil particle per cm$^3$; and taking the average of three measurements obtained by performing this measurement three times.

From the viewpoint of, for example, water dispersibility, deliquescence suppression, and sour taste suppression, the fat and/or oil particle preferably has a plate-like shape; however, this is not limitative.

From the viewpoint of, for example, water dispersibility, deliquescence suppression, and sour taste suppression, the fat and/or oil particle preferably has an average particle diameter (effective diameter) of, for example, 0.5 to 200 pm, preferably 1 to 100 pm, more preferably 1 to 60 pm, and particularly preferably 1 to 30 um.

Here, the average particle diameter (effective diameter) in the present invention is a value determined by wet measurement based on laser diffraction/scattering methods (ISO133201 and ISO9276-1) using a particle size distribution analyzer (instrument name: Microtrac MT3300ExII, produced by Nikkiso Co., Ltd.) (d50: a measured value of particle diameter at 50% in the cumulative particle size distribution).

The term "effective diameter" means a diameter of a spherical particle used to fit a measured diffraction pattern of the measurement-target particle crystal to a theoretical diffraction pattern obtained under the assumption that the measurement target particle is spherical.

In this manner, in the laser diffraction/scattering methods, an effective diameter is calculated by fitting a measured diffraction pattern to a theoretical diffraction pattern obtained under the assumption that the measurement target particle is spherical. For this reason, even when the measurement target particle has a plate-like shape or a spherical shape, the measurement can be performed according to the same principle. Herein, from the viewpoint of, for example, water dispersibility, deliquescence suppression, and sour taste suppression, the plate-like particle preferably has an aspect ratio of 1.1 or more, more preferably 1.2 to 3.0, even more preferably 1.3 to 2.5, and particularly preferably 1.4 to 2.0; however, this is not limitative.

The term "aspect ratio" as used herein is defined as the ratio of the length of a longer side to the length of a shorter side of a rectangle circumscribing a particle figure in such a manner that the area enclosed by the rectangle is minimized. When the particle has a spherical shape, the aspect ratio is smaller than 1.1. In a conventional method in which a fat and/or oil having a high solid fat content at normal temperature, such as a highly hydrogenated oil, is melted and directly sprayed, fat and/or oil particles have a spherical shape due to the surface tension, and have an aspect ratio of less than 1.1. The aspect ratio can be determined by directly observing arbitrarily selected particles with a scanning electron microscope to measure the lengths in the major-axis and minor-axis directions of each particle and calculating the average aspect ratio of the measured particles.

Fat and/or Oil Component

The fat and/or oil particle preferably contains a fat and/or oil component comprising one or more types of XXX triglycerides having a fatty acid residue X at positions 1 to 3 of glycerin, from the viewpoint of, for example, water dispersibility, deliquescence suppression, and sour taste suppression. The fat and/or oil component preferably contains at least one type of XXX triglyceride and may optionally further contain other triglycerides.

The fat and/or oil component preferably contains β-form fat and/or oil from the viewpoint of, for example, water dispersibility, deliquescence suppression, and sour taste suppression. As referred to herein, β-form fat and/or oil means a fat and/or oil consisting only of β-form crystals, i.e., one of the polymorphs of fat and/or oil crystals. Other polymorphs of fat and/or oil include β'-form fat and/or oil and α-form fat and/or oil. β'-form fat and/or oil means a fat and/or oil consisting only of β'-form crystals, i.e., one of the polymorphs of fat and/or oil crystals. α-form fat and/or oil means a fat and/or oil consisting only of α-form crystals, i.e., one of the polymorphs of fat and/or oil crystals. Some fat and/or oil crystals are identical in composition but have a different sub-lattice structure (crystal structure); these are called crystal polymorphs. Typical examples include hexagonal packing, orthorhombic perpendicular packing, and triclinic parallel packing, which are respectively referred to as α-form, β'-form, and β-form.

The melting points of the polymorphs increase in the order of the α-form, β'-form, and β-form. The melting

points of the polymorphs vary depending on the type of fatty acid residue X. Accordingly, Table 1 below shows the melting points (°C) of polymorphs of tricaprin, trilaurin, trimyristin, tripalmitin, tristearin, triarachidin, and tribehenin. Table 1 was prepared based on Nissim Garti et al., "Crystallization and Polymorphism of Fats and Fatty Acids," Marcel Dekker Inc., 1988, pp. 32-33. In preparing Table 1, each melting point temperature (°C) was rounded to the nearest whole number. When the composition of fat and/or oil and melting points of polymorphs of the fat and/or oil are known, it is at the very least possible to detect whether the fat and/or oil contains β-form fat and/or oil.

Table 1

| | α-resin (°C) | β'-resin (°C) | β-resin (°C) |
|---|---|---|---|
| Tricaprin | -9 | 16 | 32 |
| Trilaurin | 15 | 34 | 47 |
| Trimyristin | 33 | 45 | 59 |
| Tripalmitin | 45 | 57 | 66 |
| Tristearin | 55 | 63 | 74 |
| Triarachidin | 62 | 69 | 78 |
| Tribehenin | 68 | 74 | 83 |

These polymorphs are identified by the X-ray diffraction method. The diffraction conditions are given by the following Bragg's equation:

$$2\ d\sin\theta = n\lambda \text{ (wherein } n = 1, 2, 3, \ldots\text{).}$$

(wherein n = 1, 2, 3, ...).

A diffraction peak appears at a position satisfying this equation. In the equation, d represents a lattice constant, θ represents a diffraction (incident) angle, λ represents a wavelength of X-ray, and n represents a natural number. From a diffraction peak at 2θ = 16 to 27° corresponding to a short spacing, information on packing (sub-lattice) in the crystal side surface is obtained, and the polymorph can be identified. In particular, in the case of triacylglycerol, the β-form characteristic peaks appear at 2θ = near 19°, near 23°, near 24° (near 4.6 Å, near 3.9 Å, near 3.8 Å), and the characteristic peak of α-form fat and/or oil appears near 21° (4.2 Å). Each peak may have an error of ± 0.5°. The X-ray diffraction measurement is performed using an X-ray diffractometer (a horizontal sample mount X-ray diffractometer, produced by Rigaku Corporation) maintained at 20°C. As the X-ray light source, CuKα radiation (1.54 A) is most frequently used.

The fat and/or oil component preferably comprises β-form fat and/or oil, or contains β-form fat and/or oil as a main component (50 mass% or more), from the viewpoint of, for example, water dispersibility, deliquescence suppression, and sour taste suppression. In a preferable embodiment, the fat and/or oil substantially consists of β-form fat and/or oil. In a more preferable embodiment, the fat and/or oil component is composed of β-form fat and/or oil. In a particularly preferable embodiment, the fat and/or oil component consists only of β-form fat and/or oil.

The case where the fat and/or oil component consists only of β-form fat and/or oil means that no α-form fat and/or oil and/or no β'-form fat and/or oil are detected by differential scanning calorimetry. According to another preferable embodiment, in an X-ray diffraction measurement, the fat and/or oil component has a diffraction peak near 4.5 to 4.7 Å, and preferably near 4.6 Å, but has no X-ray diffraction peak of short spacing of the α-fat and/or oil and/or β'-form fat and/or oil in Table 1, in particular, has no diffraction peak near 4.2 Å. In such a case as well, it can be determined that the entire fat and/or oil component is form fat and/or oil.

In a further embodiment of the present invention, the fat and/or oil component preferably consists only of β-form fat and/or oil; however, it may contain other forms of fats and/or oils, such as α-form fat and/or oil and β'-form fat and/or oil. Herein, "containing β-form fat and/or oil" in the fat and/or oil component of the present invention and an index of the relative amount of β-form fat and/or oil to the total amount of α-form fat and/or oil + β-form fat and/or oil can be speculated from the intensity proportions of the characteristic peak of β-form fat and/or oil and the characteristic peak of α-form fat and/or oil among X-ray diffraction peaks: [characteristic peak intensity of β-form fat and/or oil /(characteristic peak intensity of α-form fat and/or oil + characteristic peak intensity of β-form fat and/or oil)] (hereinafter also referred to as the peak intensity ratio).

Specifically, based on the above findings of the X-ray diffraction measurement, "containing β-form fat and/or oil" can be understood by calculating the proportions of a peak intensity at 2θ = 19° (4.6 Å), which is the characteristic peak of β-form fat and/or oil, and a peak intensity at 2θ = 21° (4.2 Å), which is the characteristic peak of α-form fat and/or

oil: 19°/(19° + 21°) [4.6 Å/(4.6 Å + 4.2 Å)] as an indicator that indicates the amount of β-form fat and/or oil in the fat and/or oil component. In the present invention, it is the most preferable from the viewpoint of, for example, water dispersibility, deliquescence suppression, and sour taste suppression that the entire fat and/or oil component is β-form fat and/or oil (that is, the peak intensity ratio = 1). The lower limit of the peak intensity ratio is, for example, preferably 0.4 or more, more preferably 0.5 or more, particularly preferably 0.6 or more, even more preferably 0.7 or more, still even more preferably 0.75 or more, and particularly more preferably 0.8 or more. When the peak intensity is 0.4 or more, β-form fat and/or oil can be regarded as being present as the main component (50 mass% or more). Preferably, the upper limit of the peak intensity ratio is 1; however, the upper limit can be, for example, 0.99 or less, 0.98 or less, 0.95 or less, 0.93 or less, 0.90 or less, 0.85 or less, or 0.80 or less. The peak intensity ratio can be any one of the above-mentioned lower and upper limit values or any combination thereof.

XXX Triglyceride

The fat and/or oil component of the present invention preferably contains at least one type of XXX triglyceride having a fatty acid residue X with x carbon atoms at positions 1 to 3 of glycerin, from the viewpoint of, for example, water dispersibility, deliquescence suppression, and sour taste suppression. The XXX triglyceride is a triglyceride having a fatty acid residue X with x carbon atoms at positions 1 to 3 of glycerin, and the three fatty acid residues are all identical to each other.

The number of carbon atoms x is preferably an integer of 10 to 22, more preferably an integer of 12 to 22, even more preferably an integer of 14 to 20, and particularly preferably an integer of 16 to 18, from the viewpoint of, for example, water dispersibility, deliquescence suppression, and sour taste suppression.

The fatty acid residue X may be a saturated or unsaturated fatty acid residue. Specific examples of the fatty acid residue X include, but are not limited to, capric acid, lauric acid, myristic acid, palmitic acid, stearic acid, arachidic acid, behenic acid, and like acid residues. From the viewpoint of water dispersibility, deliquescence suppression, and sour taste suppression, the fatty acids are preferably lauric acid, myristic acid, palmitic acid, stearic acid, arachidic acid, behenic acid, and the like; more preferably myristic acid, palmitic acid, stearic acid, arachidic acid, and the like; and even more preferably palmitic acid, stearic acid, and the like.

XXX triglycerides can be used singly or in a combination of two or more. From the viewpoint of, for example, water dispersibility, deliquescence suppression, and sour taste suppression, one or two types of XXX triglycerides are preferably used, and one type of XXX triglyceride is more preferably used.

From the viewpoint of, for example, water dispersibility, deliquescence suppression, and sour taste suppression, the XXX triglyceride content is preferably 50 to 100 mass%, more preferably 60 to 99 mass%, even more preferably 70 to 97 mass%, and particularly preferably 80 to 95 mass%, based on the total mass of the fat and/or oil component of the fat and/or oil particle defined as 100 mass%. In the case where the fat and/or oil component contains multiple XXX triglycerides, the total content of the XXX triglycerides is preferably adjusted to fall within the above-mentioned range.

Other Triglycerides

The fat and/or oil particle may contain a triglyceride other than the above-described triglyceride as the fat and/or oil component. The triglyceride other than the above-described triglyceride can be multiple kinds of triglycerides and can be one or more synthetic fats and/or oils or natural fats and/or oils.

Examples of synthetic fats and/or oils include glyceryl tricaprylate, glyceryl tricaprate, and the like.

Examples of natural fats and/or oils include cocoa butter, sunflower seed oil, rapeseed oil, soybean oil, cottonseed oil, and the like.

The content of other triglycerides can be 1 mass% or more, for example, about 5 to 50 mass%, based on the total amount of the triglycerides in the fat and/or oil particle defined as 100 mass%. Such a content does not cause any problems. The content of other triglycerides is, for example, preferably 0 to 30 mass%, more preferably 0 to 18 mass%, even more preferably 0 to 15 mass%, and particularly preferably 0 to 8 mass%.

Other Components in Fat and/or Oil Particle

The fat and/or oil particle may optionally contain, in addition to the fat and/or oil component containing the triglyceride, other components (additives), such as an emulsifier, a flavor, a skim milk powder, a whole milk powder, a cocoa powder, sugar, dextrin, a sweetener, and a coloring agent. These optional components can also be externally added to the fat and/or oil particle. However, incorporating the optional components into the fat and/or oil particle beforehand enables these optional components to reliably and easily adhere onto a food base material.

These other components can be used in any amount, as long as the effects of the present invention are not impaired. Preferably, the amount is not excessive in consideration of oral intake use.

The content of such other components is preferably, for example, 0.001 to 70 mass%, more preferably 0.01 to 65 mass%, and even more preferably 0.1 to 30 mass%, based on the total amount of the fat and/or oil particle defined as 100 mass%.

In consideration of oral intake use as well as water dispersibility, deliquescence suppression, sour taste suppression, etc., the fat and/or oil particle in the fat and/or oil composition containing 3-hydroxybutyric acid of the present invention preferably substantially consists of the fat and/or oil component, and the fat and/or oil component preferably substantially consists of the triglyceride.

The term "substantially consist of the fat and/or oil component" means that the fat and/or oil particle contains the fat and/or oil component in an amount of, for example, 85 to 100 mass%, preferably 90 to 100 mass%, and more preferably 95 to 100 mass%, based on the total amount of the fat and/or oil particle defined as 100 mass%.

When the fat and/or oil composition containing 3-hydroxybutyric acid of the present invention is a solid, the content of the edible fat and/or oil is preferably 1 to 50 mass%, and more preferably 2 to 40 mass%, based on the total amount of the fat and/or oil composition containing 3-hydroxybutyric acid of the present invention as 100 mass%, from the viewpoint of, for example, water dispersibility, deliquescence suppression, and sour taste suppression. When the fat and/or oil composition containing 3-hydroxybutyric acid of the present invention is a liquid (aqueous dispersion), the content of the edible fat and/or oil is preferably 0.1 to 40 mass%, and more preferably 0.5 to 10 mass%, based on the total amount of the fat and/or oil composition containing 3-hydroxybutyric acid of the present invention defined as 100 mass%, from the viewpoint of, for example, water dispersibility, deliquescence suppression, and sour taste suppression.

The fat and/or oil composition containing 3-hydroxybutyric acid contains 3HB and/or a salt of 3HB, the edible fat and/or oil described above, and a protein product. From the viewpoint of, for example, water dispersibility, deliquescence suppression, and sour taste suppression, the content of the edible fat and/or oil is preferably 0.5 to 200 parts by mass, more preferably 1 to 100 parts by mass, even more preferably 3 to 90 parts by mass, and particularly preferably 5 to 50 parts by mass, based on 100 parts by mass of the 3HB and/or salt of 3HB. A not overly low content of the edible fat and/or oil makes it easy to control deliquescence, whereas a not overly high content of the edible fat and/or oil makes it easy to control sour taste.

Since 3HB and/or a salt of 3HB, edible fat and/or oil, and a protein product are incorporated in the proportions described above, the resulting composition is configured such that the 3HB and/or salt of 3HB is surface-coated with the edible fat and/or oil, which makes it easier to achieve the effects pf deliquescence suppression and sour taste suppression.

(1-3) Protein Product

The protein product is not particularly limited and examples include any protein products such as whey protein, casein protein, soy protein (soybean protein), pea protein, wheat protein, egg protein, and rice protein. In the present invention, not only water-soluble whey protein products such as whey protein but also water-insoluble protein products can enhance water dispersibility while suppressing deliquescence and sour taste of 3HB. In particular, from the viewpoint of, for example, water dispersibility, deliquescence suppression, and sour taste, whey protein, casein protein, soy protein (soybean protein), and like protein products are preferable, and whey protein products are more preferable.

These protein products can be partial degradation products in order to more easily enhance water dispersibility and absorption. Specific examples of such partial degradation products include water-soluble protein degradation products obtained by treating a raw material for a protein material with a protease, an acid, or the like to partially degrade protein contained in the raw material.

The protein product is preferably in powder form when used. The protein product can be in the form of, for example, so-called crushed powder, powder, fine powder, flakes, granules, particles, or the like, and the form of the individual protein products is not strictly limited.

The protein product as described above is not particularly limited, and known or commercially available products can be used.

When the fat and/or oil composition containing 3-hydroxybutyric acid of the present invention is a solid, the content of the protein product is preferably 20 to 90 mass%, and more preferably 30 to 80 mass%, based on the total amount of the fat and/or oil composition containing 3-hydroxybutyric acid of the present invention defined as 100 mass%, from the viewpoint of, for example, water dispersibility, deliquescence suppression, and sour taste suppression. When the fat and/or oil composition containing 3-hydroxybutyric acid of the present invention is a liquid (aqueous dispersion), the content of the protein product is preferably 1 to 90 mass%, and more preferably 2 to 90 mass%, based on the total amount of the fat and/or oil composition containing 3-hydroxybutyric acid of the present invention defined as 100 mass%, from the viewpoint of, for example, water dispersibility, deliquescence suppression, and sour taste suppression.

The fat and/or oil composition containing 3-hydroxybutyric acid of the present invention contains 3HB and/or a salt of 3HB, edible fat and/or oil and a protein product, such as those described above. The content of the protein product is preferably 30 to 2000 parts by mass, more preferably 40 to 1000 parts by mass, and even more preferably

60 to 800 parts by mass, based on 100 parts by mass of the 3HB and/or salt of 3HB, from the viewpoint of, for example, water dispersibility, deliquescence suppression, and sour taste suppression. Since intake of protein can be achieved by using a protein product, an excessive amount of protein product can be incorporated as long as enhanced water dispersibility can be achieved. When a water-soluble whey protein product is used, a particularly excessive amount of protein product can be incorporated.

(1-4) Other Components

The fat and/or oil composition containing 3-hydroxybutyric acid of the present invention also preferably contains other components as appropriate as long as the object and effect of the present invention are not impaired. Such other components are not particularly limited as long as they are edible. Examples include carbohydrate powder, dietary fibers, and the like.

Carbohydrate usually means carbohydrate products other than dietary fibers. Examples include edible sugars such as monosaccharides, disaccharides, oligosaccharides, sugar alcohols, isomerized sugars, and starch degradation products. Specific examples include glucose (monosaccharide); sugar, maltose (malt sugar), lactose, trehalose (disaccharides); maltitol, palatinite (sugar alcohols); glucose fructose liquid sugar; fructose glucose liquid sugar (isomerized sugars), syrup (a mixture of glucose, maltose, and dextrin), dextrin (a starch degradation product); and the like.

Examples of dietary fibers include wheat bran, corn bran, oat bran, cellulose-based fibers extracted from plants (e.g., corn fiber, soy dietary fiber, beet fiber, etc.), cellulose, crystalline cellulose, agar, chitosan, chitin, hemicellulose, lignin, glucan, and the like.

When the fat and/or oil composition contains such other components, their content is preferably within a range that does not impair the purpose and effects of the present invention. When the fat and/or oil composition containing 3-hydroxybutyric acid of the present invention is a solid, the content of the other components is preferably 0 to 10 mass%, and more preferably 0.01 to 5 mass%, based on the total amount of the fat and/or oil composition containing 3-hydroxybutyric acid of the present invention defined as 100 mass%, from the viewpoint of, for example, water dispersibility, deliquescence suppression, and sour taste suppression. When the fat and/or oil composition containing 3-hydroxybutyric acid of the present invention is a liquid (aqueous dispersion), the content of the other components is preferably 0 to 5 mass%, and more preferably 0.01 to 3 mass%, based on the total amount of the fat and/or oil composition containing 3-hydroxybutyric acid of the present invention defined as 100 mass%, from the viewpoint of, for example, water dispersibility, deliquescence suppression, and sour taste suppression.

(1-5) Fat and/or Oil Composition Containing 3-Hydroxybutyric Acid

The fat and/or oil composition containing 3-hydroxybutyric acid of the present invention can be in the form of a solid or a liquid (aqueous dispersion). This means that the fat and/or oil composition containing 3-hydroxybutyric acid of the present invention can be stored in the form of a solid, such as a powder, and orally ingested as is or together with water; or can be orally taken as an aqueous dispersion, which is prepared by dispersing the composition in water.

In any case, since mixing of 3-hydroxybutyric acid and/or a salt of 3-hydroxybutyric acid with edible fat and/or oil and a protein product can enhance water dispersibility of the 3-hydroxybutyric acid and/or salt of 3-hydroxybutyric acid and can also suppress deliquescence and sour taste, the resulting composition is suitable for use in oral intake and allows for suitable intake of energy source 3HB; therefore, the composition is useful as a nutritional supplementary food (dietary supplement) etc.

2. Method for Producing the Fat and/or Oil Composition Containing 3-Hydroxybutyric Acid

The method for producing the fat and/or oil composition containing 3-hydroxybutyric acid of the present invention is not particularly limited. For example, the fat and/or oil composition containing 3-hydroxybutyric acid can be obtained by a method comprising the step of (1) adding 3HB and/or a salt thereof, edible fat and/or oil, and a protein product. When the other components described above are to be contained in the fat and/or oil composition containing 3-hydroxybutyric acid of the present invention, it is preferable to add such other components in step (1) .

For example, when the fat and/or oil composition containing 3-hydroxybutyric acid of the present invention is obtained in the form of a liquid (aqueous dispersion), the step (1) can be a step of (1A) dispersing 3HB and/or a salt thereof, edible fat and/or oil, and a protein product in water. In this step, excellent water dispersibility can be obtained even by directly dispersing 3HB and/or a salt thereof, edible fat and/or oil, and a protein product in water without dry-mixing.

When the fat and/or oil composition containing 3-hydroxybutyric acid of the present invention is to be obtained in the form of a solid, 3HB and/or a salt thereof, edible fat and/or oil, and a protein product can also be dry-mixed and pulverized. In this case as well, the water dispersibility of the resulting fat and/or oil composition containing 3-hydroxybutyric acid of the present invention can be improved to a certain extent.

The mixing method is not particularly limited and mixing can be performed by known methods. Examples of such methods include mechanical mixing methods using a mixer or a mill.

From the viewpoint of ease of suppressing the agglomeration of the solid fat and/or oil composition containing 3-hydroxybutyric acid and ease of further enhancing the water dispersibility of the solid fat and/or oil composition containing 3-hydroxybutyric acid, it is preferable that the method further comprises, after step (1A), a step of (2) removing water from the fat and/or oil composition containing 3-hydroxybutyric acid in the form of an aqueous dispersion obtained in step (1A) to thereby isolate the fat and/or oil composition containing 3-hydroxybutyric acid in the form of a solid.

In step (2), the method for removing water from the fat and/or oil composition containing 3-hydroxybutyric acid in the form of an aqueous dispersion to thereby isolate the fat and/or oil composition containing 3-hydroxybutyric acid in the form of a solid is not particularly limited. Examples include methods comprising concentration using an evaporator or the like, freeze-drying, etc. to isolate water from the fat and/or oil composition containing 3-hydroxybutyric acid in the form of an aqueous dispersion. In particular, from the viewpoint of, in particular, easily suppressing agglomeration and easily further enhancing water dispersibility, it is preferable to isolate water by freeze-drying.

When freeze-drying is used in step (2), the method of freeze-drying is not particularly limited. For example, after the fat and/or oil composition containing 3-hydroxybutyric acid in the form of an aqueous dispersion is frozen by being allowed to stand at -80 to -20°C, preferably -50 to -30°C, for 8 to 48 hours, preferably 12 to 24 hours, the frozen composition can be dried using a freeze-dryer or the like for 12 to 72 hours, preferably 24 to 48 hours.

In step (1), the order in which each component is mixed is not particularly limited, and the components can be mixed simultaneously or sequentially. However, when the edible fat and/or oil is a fat and/or oil particle containing at least one type of XXX triglyceride having a fatty acid residue X at positions 1 to 3 of glycerin and is subjected to dry-mixing, it is preferable that 3-hydroxybutyric acid and/or a salt of 3-hydroxybutyric acid is first mixed with edible fat and/or oil and then a protein product is mixed. When 3HB and/or a salt of 3HB, edible fat and/or oil, and a protein product are dispersed in water as in step (1A), it is also possible to simultaneously add these components without dry-mixing.

When the edible fat and/or oil is a fat and/or oil particle containing at least one type of XXX triglyceride having a fatty acid residue X at positions 1 to 3 of glycerin, the method for producing the fat and/or oil particle is not particularly limited.

Specifically, the fat and/or oil particle can be obtained by the following production method. The fat and/or oil particle can be obtained by: melting a raw material for the fat and/or oil particle comprising at least one type of XXX triglyceride having a fatty acid residue X at positions 1 to 3 of glycerin; and maintaining the melted raw material at a specific cooling temperature to cool and solidify the material, whereby a fat and/or oil particle in the form of a powder can be obtained without using any special processing means, such as spraying or mechanical pulverization using a pulverizer such as a mill.

More specifically, the fat and/or oil particle can be obtained, for example, by a method comprising the steps of:

(a) preparing a raw material for the fat and/or oil particle comprising the XXX triglyceride;
optionally, (b) heating the raw material for the fat and/or oil particle obtained in step (a) to melt the triglyceride contained in the raw material for the fat and/or oil particle, thereby obtaining a melted raw material for the fat and/or oil particle; and
(d) cooling and solidifying the raw material for the fat and/or oil particle to obtain a fat and/or oil particle comprising β-form fat and/or oil and having a plate-like particle shape. The fat and/or oil particle can also be produced by subjecting the solid obtained after cooling to a known pulverization means, for example, using a hammer mill or a cutter mill.

The cooling in step (d) is preferably performed by cooling the raw material for the fat and/or oil particle in a melted state, for example, at a temperature that is lower than the melting point of β-form fat and/or oil of the fat and/or oil component contained in the raw material for the fat and/or oil particle and that is equal to or higher than the cooling temperature calculated from the following formula:

$$\text{Cooling temperature } (^\circ\text{C}) = \text{number of carbon atoms } x \times 6.6 - 68.$$

When the cooling is performed within this temperature range, β-form fat and/or oil can be efficiently produced and fine crystals can be formed, whereby fat and/or oil particles can be easily obtained. The term "fine" means that the primary particle (the smallest crystal) has a size of, for example, 20 μm or less, preferably 15 μm or less, and more preferably 10 um. Cooling within such a temperature range makes it easy to produce β-form fat and/or oil in a static state and makes it easy to produce fat and/or oil particles having a plate-like shape. The average particle size of the fat and/or oil particles in the fat and/or oil composition containing 3-hydroxybutyric acid of the present invention is the same as described above.

Accordingly, the fat and/or oil particle can be produced, for example, by the following steps:

a step (a) of preparing a raw material for the fat and/or oil particle containing at least one type of XXX triglyceride;
an optional step (b) of heating or otherwise treating the raw material for the fat and/or oil particle obtained in step (a) to dissolve the triglyceride(s) contained in the raw material for the fat and/or oil particle to obtain a melted raw material for the fat and/or oil particle in a melted state; and
a step (d) of cooling and solidifying the melted raw material for the fat and/or oil particle to obtain a fat and/or oil particle containing β-form fat and/or oil and having a plate-like particle shape.

Additionally, the method may include, as step (c), one or more optional steps for promoting the powder formation, for example, a seeding step (c1), a tempering step (c2), or a pre-cooling step (c3), between steps (b) and (d).
In step (d), the fat and/or oil particle can also be obtained by adding an impact (e.g., crushing, loosing, vibration, or sieving) to a solid with voids obtained after cooling.
The above steps (a) to (d) are described below.

(a) Step of preparing raw material

The raw material for the fat and/or oil particle containing XXX triglyceride to be prepared in step (a) can be produced based on a usual method for producing fats and/or oils, such as XXX triglycerides, which include at least one type of XXX triglyceride having a fatty acid residue X with x carbon atoms at positions 1 to 3 of glycerin; or can be easily obtained from the market.
Herein, the XXX triglyceride specified by the number of carbon atoms x and the type of fatty acid residue X are identical to those of the ultimately obtained target fat and/or oil component except in terms of polymorphs. The raw material may contain β-form fat and/or oil.
For example, β-form fat and/or oil may be present in an amount of, for example, 0 to 0.1 mass%, 0.0001 to 0.05 mass%, or 0.0002 to 0.01 mass%. However, when the raw material is heated or treated otherwise and thus becomes in a melted state, the β-form fat and/or oil is lost from the raw material. Therefore, the raw material to be used may be a raw material in a melted state. For example, when the raw material is in a melted state, the meaning of the raw material substantially containing no β-form fat and/or oil includes the case in which not only XXX triglycerides but also substantially the entire fat and/or oil component contains no β-form fat and/or oil. The presence of β-form fat and/or oil can be confirmed, for example, by observing diffraction peaks derived from β-form fat and/or oil by X-ray diffraction measurement or detecting β-form fat and/or oil by differential scanning calorimetry as described above. In the case of "substantially containing no β-form fat and/or oil," the amount of β-form fat and/or oil present can be speculated from the intensity proportions of the characteristic peak of β-form fat and/or oil and the characteristic peak of α-form fat and/or oil among X-ray diffraction peaks: [characteristic peak intensity of β-form fat and/or oil / (characteristic peak intensity of α-form fat and/or oil + characteristic peak intensity of β-form fat and/or oil)] (peak intensity ratio). The peak intensity ratio of the raw material for the fat and/or oil particle is, for example, preferably 0 to 0.2, more preferably 0.0001 to 0.15, and even more preferably 0.0002 to 0.10. The raw material for the fat and/or oil particle can contain one type or two or more types of the XXX triglycerides described above.
Specifically, for example, the XXX triglyceride can be produced by direct synthesis using a fatty acid or a fatty acid derivative and glycerin. The method for directly synthesizing the XXX triglyceride includes:

(i) a method of directly esterifying a fatty acid having x carbon atoms and glycerin (direct esterification synthesis);
(ii) a method of reacting glycerin with a fatty acid alkyl ester wherein a carboxyl group of a fatty acid X having x carbon atoms is bonded to an alkoxyl group (e.g., a fatty acid methyl ester or a fatty acid ethyl ester) under basic or acidic catalyst conditions (transesterification synthesis using a fatty acid alkyl ester); and
(iii) a method of reacting glycerin with a fatty acid halide wherein a hydroxyl group of a carboxyl group of the fatty acid X having x carbon atoms is substituted with a halogen (e.g., fatty acid chloride or fatty acid bromide) in the presence of a basic catalyst (acid halide synthesis).

The XXX triglyceride can be produced by any of the above methods (i) to (iii). From the viewpoint of ease of production, the direct esterification synthesis (i) or the transesterification synthesis using a fatty acid alkyl ester (ii) is preferable, and the direct esterification synthesis (i) is more preferably used to produce the XXX triglyceride.
In order to produce the XXX triglyceride by the direct esterification synthesis (i), the fatty acid X or fatty acid Y is preferably used in an amount of 3 to 5 moles, and more preferably 3 to 4 moles, per mole of glycerin, from the viewpoint of production efficiency.
The reaction temperature of the XXX triglyceride in the direct esterification synthesis (i) can be any temperature at which water generated by the esterification reaction can be removed to the outside of the system. For example, the

temperature is preferably 120°C to 300°C, more preferably 150°C to 270°C, and even more preferably 180°C to 250°C. When the reaction is performed at 180 to 250°C, the XXX triglyceride can be particularly efficiently produced.

In the direct esterification synthesis (i) of the XXX triglyceride, a catalyst that promotes the esterification reaction can be used. Examples of usable catalysts include acidic catalysts, alkaline earth metal alkoxides, and the like. The amount of catalyst used is preferably about 0.001 to 1 mass% based on the total mass of the reaction raw materials.

In the direct esterification synthesis (i) of the XXX-triglyceride, the catalyst and unreacted raw materials can be removed, after the reaction, by performing a known purification treatment, such as washing with water, alkaline deacidification and/or deacidification under reduced pressure, and adsorption treatment. Further, decolorization and deodorization treatments can be performed to further purify the obtained product

When the total mass of all the triglycerides contained in the raw material for the fat and/or oil particle is defined as 100 mass%, the amount of the XXX triglyceride contained in the fat and/or oil particle is preferably 50 to 100 mass%, more preferably 55 to 95 mass%, even more preferably 60 to 90 mass%, and particularly preferably 65 to 85 mass%.

Examples of the raw material for the fat and/or oil particle containing XXX triglyceride include commercially available triglyceride compositions and commercially available synthetic fats and/or oils. Examples of triglyceride compositions include hard palm stearin (produced by The Nisshin OilliO Group, Ltd.), highly hydrogenated rapeseed oil (produced by Yokozeki Oil & Fat Industries Co., Ltd.), highly hydrogenated soybean oil (produced by Yokozeki Oil & Fat Industries Co., Ltd.), and the like. Examples of synthetic fats and/or oils include tripalmitin (produced by Tokyo Chemical Industry Co., Ltd.), tristearin (produced by Sigma-Aldrich Corporation), tristearin (produced by Tokyo Chemical Industry Co., Ltd.), triarachidin (produced by Tokyo Chemical Industry Co., Ltd.), tribehenin (produced by Tokyo Chemical Industry Co., Ltd.), and the like. In addition, highly hydrogenated palm oil, which has a low XXX triglyceride content, can be used as a component for diluting the triglyceride.

The fat and/or oil particle containing XXX triglyceride may optionally contain other components, such as a partial glyceride, a fatty acid, an antioxidant, an emulsifier, water, and like solvents, as described above.

When the raw material for the fat and/or oil particle containing XXX triglyceride contains multiple components, the components can be optionally mixed. Any known mixing method can be used for the mixing operation, as long as a homogeneous reaction substrate is obtained. The mixing operation can be performed, for example, using a paddle mixer, an agi-homo mixer, or a disper mixer.

The mixing operation may be performed under heating as necessary. The heating is preferably performed at a heating temperature comparable to that in step (b) to be described below. For example, the heating is preferably performed at 50 to 120°C, more preferably 60 to 100°C, even more preferably 70 to 90°C, and particularly preferably 78 to 82°C.

(b) Step of obtaining the material for a fat and/or oil particle in melted state

Before step (d), if the raw material for the fat and/or oil particle containing XXX triglyceride prepared in step (a) is in a melted state when prepared, the raw material for the fat and/or oil particle is preferably directly cooled without heating. If the raw material for the fat and/or oil particle is not in a melted state when prepared, the raw material for the fat and/or oil particle is optionally heated to melt the triglyceride contained in the raw material for the fat and/or oil particle, thus obtaining the raw fat and/or oil material in a melted state.

Here, the raw material for the fat and/or oil particle is preferably heated to a temperature equal to or more than the melting points of triglycerides contained in the raw material for the fat and/or oil particle, and more preferably to a temperature at which XXX triglyceride can be melted. The heating temperature is preferably 70 to 200°C, more preferably 75 to 150°C, and even more preferably 80 to 100°C. The heating can be continued, for example, for 0.1 to 3 hours, preferably 0.3 to 2 hours, and more preferably 0.5 to 1 hour.

(d) Step of cooling the raw material for the fat and/or oil particle in melted state to obtain fat and/or oil particle

The raw material for the fat and/or oil particle containing XXX triglyceride in a melted state prepared in step (a) or (b) above is preferably further cooled and solidified to form a fat and/or oil particle containing β-form fat and/or oil and having a plate-like particle shape.

In order to "cool and solidify the raw material for the fat and/or oil particle in a melted state," the upper limit of the cooling temperature for cooling the raw material for the fat and/or oil particle in a melted state is preferably kept lower than the melting point of β-form fat and/or oil of the fat and/or oil component contained in the raw material for the fat and/or oil particle, which is. For example, consider the case where the XXX triglyceride has three stearic acid residues each having 18 carbon atoms. In this case, since the melting point of β-form fat and/or oil is 74°C (Table 1), the "temperature lower than the melting point of the β-form fat and/or oil of the fat and/or oil component contained in the raw material for the fat and/or oil particle" is preferably a temperature lower by 1 to 30°C than the melting point (i.e., 44 to 73°C), more preferably a temperature lower by 1 to 20°C than the melting point (i.e., 54 to 73°C), even more preferably a temperature

lower by 1 to 15°C than the melting point (i.e., 59 to 73°C), and particularly preferably a temperature lower by 1 to 10°C than the melting point (i.e., 64 to 73°C).

In order to obtain β-form fat and/or oil, the lower limit of the cooling temperature is preferably kept equal to or higher than the cooling temperature obtained from the following formula:

$$\text{Cooling temperature } (^\circ C) = \text{Number of carbon atoms } x \times 6.6 - 68$$

wherein the number of carbon atoms x represents the number of carbon atoms x of the XXX triglyceride contained in the raw material for the fat and/or oil particle.

Setting the cooling temperature to the temperature calculated above or higher tends to suppress crystallization of α-form fat and/or oil and β'-form fat and/or oil, i.e., fats and/or oils other than β-form fat and/or oil, when crystallization is performed to obtain β-form fat and/or oil containing XXX triglyceride. Since the cooling temperature depends mainly on the size of the molecule of XXX triglyceride, it can be understood that there is a certain correlation between the number of carbon atoms x and the lower limit of the optimum cooling temperature.

For example, when the XXX triglyceride contained in the raw material for the fat and/or oil particle is a XXX triglyceride having three stearic acid residues each having 18 carbon atoms, the lower limit of the cooling temperature is preferably 50.8°C or more. Accordingly, when the XXX triglyceride has three stearic acid residues each having 18 carbon atoms, the temperature of "cooling and solidifying the raw material for the fat and/or oil particle in a melted state" is more preferably 50.8°C or more and 72°C or less.

When the XXX triglyceride is a mixture of two or more types of XXX triglycerides, the lower limit of the cooling temperature of the mixture is preferably set in accordance with the cooling temperature of the XXX triglyceride having the smallest number of carbon atoms x. For example, when the XXX triglyceride contained in the raw material for the fat and/or oil particle is a mixture of a XXX triglyceride having three palmitic acid residues each having 16 carbon atoms and a XXX triglyceride having three stearic acid residues each having 18 carbon atoms, the lower limit of the cooling temperature is preferably set to a temperature of 37.6°C or higher in accordance with the cooling temperature of the XXX triglyceride having 16 carbon atoms, which is the smaller number of carbon atoms.

In another embodiment, it is appropriate to set the lower limit of the cooling temperature to a temperature equal to or higher than the melting point of the α-form fat and/or oil corresponding to the β-form fat and/or oil of the raw material for the fat and/or oil particle containing XXX triglyceride. For example, when the XXX triglyceride contained in the raw material for the fat and/or oil particle is a XXX triglyceride having three stearic acid residues each having 18 carbon atoms, the temperature of "cooling and solidifying the raw material for the fat and/or oil particle in a melted state" is preferably 55°C or more and 72°C or less, because the melting point of the α-form fat and/or oil containing the XXX triglyceride having three stearic acid residues is 55°C (Table 1).

In still another embodiment, cooling of the raw material for the fat and/or oil particle containing XXX triglyceride in a melted state is preferably performed to achieve a final temperature of -2 to 46°C, more preferably 12 to 44°C, and even more preferably 14 to 42°C, for example, when x is 10 to 12. For example, when x is 13 or 14, the final temperature in the cooling is preferably 24 to 56°C, more preferably 32 to 54°C, and even preferably 40 to 52°C. When x is 15 or 16, the final temperature in the cooling is preferably 36 to 66°C, more preferably 44 to 64°C, and even more preferably 52 to 62°C. When x is 17 or 18, the final temperature in the cooling is preferably 50 to 72°C, more preferably 54 to 70°C, and even more preferably 58 to 68°C. When x is 19 or 20, the final temperature in the cooling is preferably 62 to 80°C, more preferably 66 to 78°C, and even more preferably 70 to 77°C. When x is 21 or 22, the final temperature in the cooling can be preferably 66 to 84°C, more preferably 70 to 82°C, and even more preferably 74 to 80°C. The raw material for the fat and/or oil particle can be preferably allowed to stand at the final temperature, for example, for 2 hours or more, more preferably 4 hours or more, and even more preferably 6 hours or more, and preferably 2 days or less, more preferably 24 hours or less, and even more preferably 12 hours or less.

(c) Step of promoting powder formation

The method preferably further comprises an optional step of (c) performing a powder formation-promoting step before step (d), between step (a) or (b) and step (d). In step (c), the raw material for the fat and/or oil particle in a melted state, which is to be used in step (d), may be subjected to seeding, tempering, pre-cooling, or like treatment processes. That is, a seeding process (c1), a tempering process (c2), or a pre-cooling process (c3) can be preferably performed as step (c). These steps (c1) to (c3) can be used singly or in a combination of two or more. The phrase "between step (a) or (b) and step (d)" as used herein is meant to include all of the following: "during step (a) or (b)," "after step (a) or (b) but before step (d)," and "during step (d)."

The seeding process and the tempering process are powder formation-promoting methods comprising treating the raw material for the fat and/or oil particle in a melted state in order to facilitate powdering of the raw material for the

fat and/or oil particle in a melted state before cooling to the final temperature in the production of the fat and/or oil particle contained in the fat and/or oil composition containing 3-hydroxybutyric acid of the present invention.

Here, the seeding process is a method for promoting powdering by adding a small amount of a component that serves as a core (seed) of powder at the time of cooling the raw material for the fat and/or oil particle in a melted state. Specifically, for example, a fat and/or oil powder containing preferably 80 mass% or more, more preferably 90 mass% or more, of a XXX triglyceride having the same number of carbon atoms as the XXX triglyceride contained in the raw material for the fat and/or oil particle can be prepared as a component that is to be added to the raw material for the fat and/or oil particle in a melted state obtained in step (b) and that serves as the core (seed). The fat and/or oil powder that serves as the core is added in an amount of 0.1 to 1 part by mass, preferably 0.2 to 0.8 parts by mass, to 100 parts by mass of the raw material for the fat and/or oil particle in a melted state when the temperature of the raw material for the fat and/or oil particle has reached, for example, a temperature in the range of the final cooling temperature $\pm$ 0 to +10°C, preferably a temperature in the range of the final cooling temperature +5 to +10°C, during the cooling of the raw material for the fat and/or oil particle in a melted state, thereby promoting powdering of the raw material for the fat and/or oil particle.

The tempering process is a method capable of promoting powdering of the raw material for the fat and/or oil particle by cooling once at a temperature lower than the cooling temperature used in step (d) before the raw material for the fat and/or oil particle is allowed to stand at the final cooling temperature in cooling of the raw material for the fat and/or oil particle in a melted state. For example, the raw material for the fat and/or oil particle in a melted state is once cooled to a temperature lower than the cooling temperature in step (d) by 5 to 20°C, preferably a temperature lower by 7 to 15°C, and more preferably a temperature lower by about 10°C, preferably for 10 to 120 minutes, and more preferably for about 30 to 90 minutes.

The pre-cooling process is a method performed before the cooling in step (d), the method comprising pre-cooling the raw material for the fat and/or oil particle in a melted state obtained in step (a) or (b) at a temperature between the temperature used at the time of preparing the raw material for the fat and/or oil particle containing XXX triglyceride and the cooling temperature used at the time of cooling the raw material for the fat and/or oil particle. In other words, it is a method of pre-cooling at a temperature that is lower than the temperature of the melted state in step (a) or (b) and that is higher than the cooling temperature in step (d). After the pre-cooling step (c3), cooling is preferably performed at the cooling temperature used at the time of cooling the raw material for the fat and/or oil particle in step (d). The temperature higher than the cooling temperature of step (d) can be, for example, a temperature higher by 2 to 40°C, preferably a temperature higher by 3 to 30°C, more preferably a temperature higher by 4 to 30°C, and even more preferably a temperature higher by about 5 to 10°C than the cooling temperature in step (d). The lower the temperature for pre-cooling is set, the shorter the main cooling time at the cooling temperature in step (d) can be.

Thus, unlike the seeding process and the tempering process, the pre-cooling process is a method capable of promoting powdering of the raw material for the fat and/or oil particle by simply lowering the cooling temperature stepwise, and has a great advantage in industrial production.

The solid with voids obtained after cooling in step (d) is preferably a solid with voids having an increased volume as compared to the raw material for the fat and/or oil particle in a melted state. Since the solid with voids easily collapses into a powder material, a powder material can be obtained, even without particularly providing a powdering step by collapse of voids during a step of filling a container with the solid with voids or a transportation step.

To explain the details, preferably, the raw material for the fat and/or oil particle containing XXX triglyceride is first melted to obtain the raw fat and/or oil material in a melted state and then cooled to form a solid with voids having increased volume, as compared to the raw material for the fat and/or oil particle in a melted state. The raw material for the fat and/or oil particle that is in the form of a solid with voids can easily be pulverized by a mild impact, whereby the solid easily collapses into a powder form.

The method for giving an impact is not particularly limited and examples include a method of pulverizing a solid with voids using a usual pulverizer (such as a hammer mill or a cutter mill); a method of loosening a solid with voids using a spatula, a rubber spatula, a shovel, or the like; a method of shaking a solid with voids in a container; and a method of sieving a solid with voids; and the like.

Embodiments of the present invention are described above. However, the present invention is not limited to such embodiments and can, of course, be carried out in various configurations without departing from the gist of the present invention.

## Examples

Embodiments of the present invention are described in more detail below based on Examples. However, the present invention is not limited thereto or thereby.

The (R)-3-hydroxybutyric acid crystals used in the following Examples were prepared in the following manner. An aqueous R-3-hydroxybutyric acid solution produced in accordance with the method described in Example 1 of

JP2019-176839A was concentrated in an evaporator set at 70°C until no water was released. 30 mass% of ethyl acetate relative to the weight of the concentrate and seed crystals of R-3-hydroxybutyric acid were then added. The resulting mixture was allowed to stand at 4°C overnight, and then filtered and dried.

As edible fat and/or oil, fat and/or oil particles were produced in accordance with Production Example 1 described below. The medium-chain fatty acid (MCT) oil used was Coconard RK produced by Kao Corporation. The olive oil used was BOSCO extra virgin olive oil produced by Nisshin OilliO Group Inc.

As protein products, the whey protein IsoPro from BULKSPORTS (BodyPlus International K.K.), the casein protein Big Casein from BULKSPORTS (BodyPlus International K.K.), the soy protein SoyPro from BULKSPORTS (BodyPlus International K.K.) were used as protein products.

Analysis Method

Triglyceride composition

Gas chromatographic analysis conditions
DB1-ht (0.32 mm × 0.1 μm × 5 m) produced by Agilent Technologies (123-1131)
Injection volume: 1.0 μL
Inlet: 370°C
Detector: 370°C
Split ratio: 50/1 35.1 kPa
Constant pressure
Column CT: 200°C (0 min hold) to (15°C/min) to 370°C (4 min hold).

X-ray diffraction measurement

Measurements were performed with an Ultima IV X-ray diffractometer (produced by Rigaku Co., Ltd.) using CuKα (λ = 1.542 Å) as a radiation source and using a Cu filter under the following conditions: a power output of 1.6 kW, an operating angle of 0.96 to 30.0°, and a measurement speed of 2°/min. In this measurement, when only the peak around 4.6 Å was present and no peaks were observed around 4.1 to 4.2 Å, it was determined that the fat and/or oil component consisted only of β-form fat and/or oil.

From the results of the X-ray diffraction measurements, the peak intensity ratio = [intensity of characteristic peak of β-form fat and/or oil (2θ = 19°(4.6 Å)) / (intensity of characteristic peak of α-form fat and/or oil (2θ = 21°(4.2 Å)) + intensity of characteristic peak of β-form fat and/or oil (2θ = 19° (4.6 Å)))] was measured as an index of the amount of β-form fat and/or oil present.

Loose bulk density

The loose bulk density of the fat and/or oil particle ($g/cm^3$) was determined by letting the fat and/or oil particle fall approximately 2 cm above the upper opening end of a graduated cylinder with an inner diameter 15 mm × 25 mL to loosely fill the graduated cylinder with the fat and/or oil particle; measuring the mass (g) of the fat and/or oil particle in the cylinder and reading the volume (mL) of the fat and/or oil particle in the cylinder; and calculating the mass (g) of the fat and/or oil particle per $cm^3$.

Aspect ratio

Particles were directly observed with an S-3400N scanning electron microscope (produced by Hitachi High-Technologies Corporation). Using software for measuring particle size distribution through image analysis (Mac-View, produced by Mountech Co., Ltd.), arbitrarily selected particles were measured for lengths in the major-axis and minor-axis directions, and the average of the measured particles was obtained.

Average particle diameter

The average particle diameter of the obtained fat and/or oil particles was determined by wet measurement based on laser diffraction/scattering methods (ISO133201, ISO9276-1) using a particle size distribution analyzer (Microtrac MT3300 Ex II, produced by Nikkiso Co., Ltd.).

Specifically, a very small-volume circulator (equipment name: USVR, produced by Nikkiso Co., Ltd.) was attached to the particle size distribution analyzer, and water was circulated as a dispersion solvent. 0.06 g of a sample and 0.6 g of a neutral detergent were placed in a 100-ml beaker and mixed with a spatula. After the mixing, 30 ml of water was added and the resulting mixture was subjected to an ultrasonic cleaner (equipment name: AU-16C, produced by Aiwa Medical Industry Co., Ltd.) for 1 minute. The resulting mixture was added dropwise to the circulator and circulated for measurement. The measured particle size at a cumulative percentage of 50% in the obtained particle size distribution (d50) was used as the average particle size.

Production Example 1: Preparation of fat and/or oil particle

1 kg of a triglyceride having a stearic acid residue (having 18 carbon atoms) at positions 1 to 3 (XXX triglyceride: 79.1 mass%, highly hydrogenated rapeseed oil, produced by Yokozeki Oil & Fat Industries Co., Ltd.) was maintained at 80°C for 10 hours and thereby completely melted. The melted triglyceride was cooled in a thermostatic chamber at 60°C for 15 hours to form a solid with voids having an increased volume. After completion of crystallization, cooling was performed until a room temperature (25°C) condition was achieved. The obtained solid was pulverized with a hammer mill to obtain a powder oil (melting point: 67.4°C, loose bulk density: 0.2 g/cm$^3$, aspect ratio 1.6, average particle diameter: 14.4 μm, X-ray diffraction measurement diffraction peak: 4.6 Å, peak intensity ratio: 0.89). This was used as the fat and/or oil particle.

Examples 1 to 22 and Comparative Example 1

35 g of distilled water and a protein product (whey protein, casein protein, or soy protein) in the amounts shown in Tables 2 to 7 were added to a mill mixer (IJM-M800-W, produced by Iris Ohyama Inc.) and lightly stirred. (R)-3-hydroxybutyric acid crystals and edible fat and/or oil shown in Tables 2 to 7 were added in the amounts shown in Tables 2 to 7. The resulting mixture was pulverized for 5 seconds four times. Note that for Examples 1 to 12 and 21 to 22 and Comparative Example 1 in which the fat and/or oil particle of Production Example 1 was used as shown in Tables 2 to 4 and 7, (R)-3-hydroxybutyric acid crystals and the fat and/or oil particle obtained in Production Example 1 were mixed beforehand by pulverization in a mill mixer (IJM-M800-W, produced by Iris Ohyama Inc.) for 3 seconds five times, and the resulting mixture was added to water containing a protein product (whey protein, casein protein, or soy protein) and pulverized in the same manner. The fat and/or oil compositions containing 3-hydroxybutyric acid obtained in the Examples and Comparative Examples were transferred to containers and allowed to stand. Photographs of the fat and/or oil compositions containing 3-hydroxybutyric acid were taken after 1 hour and after 1 day to evaluate their appearance. The evaluation criteria are as shown below. Tables 2 to 7 and Figs 1 to 6 show the results. The water dispersibility in Tables 2 to 7 shows water dispersibility after 1 day.

S: Almost completely dispersed.
A: About half dispersed; the rest precipitated.
B: Hardly dispersed.

Table 2

| | Examples | | | | | Comparative Example |
|---|---|---|---|---|---|---|
| | 1 | 2 | 3 | 4 | 5 | 1 |
| 3HB crystals (g) | 2.4 | 2.4 | 2.4 | 2.4 | 2.4 | 2.4 |
| Edible fat and/or oil<br>Production Example 1 (g) | 0.6 | 0.6 | 0.6 | 0.6 | 0.6 | 0.6 |
| Protein<br>Whey protein product (g) | 1.0 | 1.5 | 3.0 | 4.0 | 5.0 | 0 |
| Water (g) | 35 | 35 | 35 | 35 | 35 | 35 |
| Water dispersibility | S | S | S | S | S | B |

Table 3

| | Examples | | |
|---|---|---|---|
| | 6 | 7 | 8 |
| 3HB crystals (g) | 0.8 | 0.8 | 0.8 |
| Edible fat and/or oil<br>Production Example 1 (g) | 0.2 | 0.2 | 0.2 |
| Protein<br>Whey protein product (g) | 2.7 | 4.0 | 8.0 |
| Water (g) | 35 | 35 | 35 |
| Water dispersibility | S | S | S |

Table 4

| | Examples | | | |
|---|---|---|---|---|
| | 9 | 10 | 11 | 12 |
| 3HB crystals (g) | 1.5 | 1.5 | 0.5 | 0.5 |
| Edible fat and/or oil<br>Production Example 1 (g) | 1.5 | 1.5 | 0.5 | 0.5 |
| Protein<br>Whey protein product (g) | 1.5 | 5.0 | 2.7 | 5.0 |
| Water (g) | 35 | 35 | 35 | 35 |
| Water dispersibility | S | S | S | S |

Table 5

| | Examples | | | |
|---|---|---|---|---|
| | 13 | 14 | 15 | 16 |
| 3HB crystals (g) | 2.4 | 2.4 | 2.4 | 2.4 |
| Edible fat and/or oil<br>MCT oil (g) | 0.6 | 0.6 | 0.6 | 0.6 |
| Protein<br>Whey protein product (g) | 1.5 | 3.0 | 4.0 | 5.0 |
| Water (g) | 35 | 35 | 35 | 35 |
| Water dispersibility | S | S | S | S |

Table 6

| | Examples | | | |
|---|---|---|---|---|
| | 17 | 18 | 19 | 20 |
| 3HB crystals (g) | 2.4 | 2.4 | 2.4 | 2.4 |
| Edible fat and/or oil<br>Olive oil (g) | 0.6 | 0.6 | 0.6 | 0.6 |
| Protein<br>Whey protein product (g) | 1.5 | 3.0 | 4.0 | 5.0 |

(continued)

| | Examples | | | |
|---|---|---|---|---|
| | 17 | 18 | 19 | 20 |
| Water (g) | 35 | 35 | 35 | 35 |
| Water dispersibility | S | S | S | S |

Table 7

| | Example | | | Comparative Example |
|---|---|---|---|---|
| | 2 | 21 | 22 | 1 |
| 3HB crystals (g) | 2.4 | 2.4 | 2.4 | 2.4 |
| Edible fat and/or oil Production Example 1 (g) | 0.6 | 0.6 | 0.6 | 0.6 |
| Protein | | | | |
| Whey protein product (g) | 1.5 | 0 | 0 | 0 |
| Casein protein (g) | 0 | 1.5 | 0 | 0 |
| Soy protein (g) | 0 | 0 | 1.5 | 0 |
| Water (g) | 35 | 35 | 35 | 35 |
| Water dispersibility | S | S | S | B |

Comparative Examples 2 to 10

0.8 g of (R)-3-hydroxybutyric acid crystals and 0.2 g of the fat and/or oil particle obtained in Production Example 1 were mixed beforehand using a mill mixer (IJM-M800-W, Iris Ohyama Inc.).

20 g (20 ml) of distilled water and 1 g of the obtained mixture were placed in a bottle container, and one of the emulsifiers shown in Table 5 was added in the amounts shown in Table 5 (20 mg or 50 mg). Note that in Comparative Example 2, no emulsifier was added.

The resulting mixture was then stirred with a stirrer for 30 minutes and the appearance of each mixture immediately after stirring was evaluated. The evaluation criteria are as shown below. Tables 8 to 9 and Fig. 7 show the results.

S: Almost completely dispersed
A: About half dispersed; the rest precipitated.
B: Hardly dispersed.

Table 8

| | Comparative Examples | | | | |
|---|---|---|---|---|---|
| | 2 | 3 | 4 | 5 | 6 |
| 3HB crystals (g) | 0.8 | 0.8 | 0.8 | 0.8 | 0.8 |
| Edible fat and/or oil Production Example 1 (g) | 0.2 | 0.2 | 0.2 | 0.2 | 0.2 |
| Emulsifier | | | | | |
| Poem SSL-100 (g) | 0 | 0.02 | 0 | 0 | 0 |
| Lecion P (g) | 0 | 0 | 0.02 | 0 | 0 |
| Emulsy MS (g) | 0 | 0 | 0 | 0.02 | 0 |
| Poem B-30 (g) | 0 | 0 | 0 | 0 | 0.02 |
| Water (g) | 20 | 20 | 20 | 20 | 20 |

(continued)

| | Comparative Examples | | | | |
|---|---|---|---|---|---|
| | 2 | 3 | 4 | 5 | 6 |
| Water dispersibility | B | B | B | B | B |

Table 9

| | Comparative Examples | | | | |
|---|---|---|---|---|---|
| | 2 | 7 | 8 | 9 | 10 |
| 3HB crystals (g) | 0.8 | 0.8 | 0.8 | 0.8 | 0.8 |
| Edible fat and/or oil<br>Production Example 1 (g) | 0.2 | 0.2 | 0.2 | 0.2 | 0.2 |
| Emulsifiers | | | | | |
| Poem SSL-100 (g) | 0 | 0.05 | 0 | 0 | 0 |
| Lecion P (g) | 0 | 0 | 0.05 | 0 | 0 |
| Emulsy MS (g) | 0 | 0 | 0 | 0.05 | 0 |
| Poem B-30 (g) | 0 | 0 | 0 | 0 | 0.05 |
| Water (g) | 20 | 20 | 20 | 20 | 20 |
| Water dispersibility | B | B | B | B | B |

The above results clearly indicate that the compositions obtained in Examples 1 and 22, which contained 3-hydroxybutyric acid and/or a salt of 3-hydroxybutyric acid, edible fat and/or oil, and a protein product, have excellent water dispersibility, even as compared to the composition of Comparative Example 1, which contained no protein products.

On the other hand, the results also clearly indicate that when various emulsifiers, such as those contained in protein products such as Lesion P were used as in Comparative Examples 3 to 10, water dispersibility cannot be improved even with use of the maximum amount of such an emulsifier for oral intake; and that there is little difference in water dispersibility between the compositions containing such an emulsifier and the composition of Comparative Example 2, which contained no emulsifiers. Thus, it can be understood that emulsifiers are inappropriate as a water dispersant for compositions containing 3HB and edible fat and/or oil (in particular, compositions for oral intake).

Examples 23 to 25

(R)-3-hydroxybutyric acid crystals, edible fat and/or oil, and a protein product were weighed in the proportions shown in Table 10 below. The resulting mixture was dry-milled for 3 seconds five times in a mill mixer (IJM-M800-W, produced by Iris Ohyama Inc.). 1 g of the fat and/or oil composition containing 3-hydroxybutyric acid obtained in each Example (in solid form) was weighed in a petri dish and left uncovered in a room adjusted to 25°C for 1 week. The appearance of each composition was then evaluated. The evaluation criteria are shown below. Table 10 and Fig. 8 show the results.

S: High fluidity and silky smoothness.
A: Slightly moist but highly fluid powder.
B: Agglomeration or deliquescence occurred.

Table 10

| | Examples | | |
|---|---|---|---|
| | 23 | 24 | 25 |
| 3HB crystals (g) | 2.4 | 2.4 | 1.5 |

(continued)

| | Examples | | |
|---|---|---|---|
| | 23 | 24 | 25 |
| Edible fat and/or oil<br>Production Example 1 (g) | 0.6 | 0.6 | 1.5 |
| Protein product<br>Whey protein (g) | 3.0 | 12.0 | 8.0 |
| Appearance immediately after milling | A | A | S |
| Appearance immediately after 1 day | A | A | S |
| Appearance immediately after 1 week | A | A | S |

The above results clearly indicates that the compositions obtained in Examples 23 to 25, which contain 3-hydroxybutyric acid and/or a salt of 3-hydroxybutyric acid, edible fat and/or oil, and a protein product, can suppress deliquescence of 3HB. The sour taste of the compositions obtained in Examples 23 to 25 was evaluated by three expert panelists. All three panelists evaluated the sour taste of all of the Examples as suppressed.

Example 26

1.4 g of (R)-3-hydroxybutyric acid crystals, 0.6 g of the fat and/or oil particle obtained in Production Example 1 (herein sometimes simply referred to as "Production Example 1"), and 2.0 g of whey protein were added to 20 mL of distilled water, and the resulting mixture was stirred using a mill mixer (IJM-M800-W, produced by Iris Ohyama Inc.) for 3 seconds five times.

The obtained fat and/or oil composition containing 3-hydroxybutyric acid was transferred to a container and allowed to stand, and then photographed after 1 hour and after 1 day to evaluate the appearance. In both evaluations, the composition was almost completely dispersed.

The obtained fat and/or oil composition containing 3-hydroxybutyric acid was frozen in a freezer at -30°C overnight and then treated with a freeze-dryer (Freeze Dryer FD-1, produced by Eyela) for 24 hours.

After the solid obtained by freeze-drying was pulverized using the mill-mixer described above, 1 g of the obtained powder was removed and dispersed in 20 mL of water. The powder was almost completely dispersed. Even after one day, the powder was still almost completely dispersed and no precipitation was observed.

Example 27

1.4 g of (R)-3-hydroxybutyric acid crystals, 0.6 g of the fat and/or oil particle obtained in Production Example 1 (Production Example 1), and 4.0 g of whey protein were added to 20 mL of distilled water and stirred with a mill mixer (IJM-M800-W, produced by Iris Ohyama Inc.) for 3 seconds five times.

The obtained fat and/or oil composition containing 3-hydroxybutyric acid was transferred to a container and allowed to stand, and then photographed after 1 hour and after 1 day to evaluate the appearance. In both evaluations, the composition was almost completely dispersed.

The obtained fat and/or oil composition containing 3-hydroxybutyric acid was frozen in a freezer at -30°C overnight and then treated with a freeze-dryer (Freeze Dryer FD-1, produced by Eyela) for 24 hours.

After the solid obtained by freeze-drying was pulverized using the mill-mixer described above, 1 g of the obtained powder was removed and dispersed in 20 mL of water. The powder was almost completely dispersed. Even after 1 day, the powder was still almost completely dispersed without any precipitation.

Furthermore, Production Examples for producing fat and/or oil particles other than the fat and/or oil particle of Production Example 1 are described below. The powder fat and/or oil particles obtained by the Production Examples below can also be used in the same manner as in the Examples described above and produce the effects of the present invention.

Production Example 2: x = 16

25 g of a triglyceride having palmitic acid residues (each having 16 carbon atoms) at positions 1 to 3 (XXX triglyceride: 89.7 mass%, tripalmitin, produced by Tokyo Chemical Industry Co., Ltd.) was maintained at 80°C for 0.5

hours and thereby completely melted. The melted triglyceride was cooled in a thermostatic chamber at 50°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/$cm^3$, aspect ratio: 2.0, average particle diameter: 119 μm, X-ray diffraction measurement diffraction peak: 4.6 Å, peak intensity ratio: 0.90).

Production Example 3: x = 16

25 g of a triglyceride having palmitic acid residues (each having 16 carbon atoms) at positions 1 to 3 (XXX triglyceride: 69.9 mass%, hard palm stearin, produced by The Nisshin OilliO Group, Ltd.) was maintained at 80°C for 0.5 hours and thereby completely melted. The melted triglyceride was cooled in a thermostatic chamber at 50°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.3 g/$cm^3$, aspect ratio: 1.4, average particle diameter: 99 um, X-ray diffraction measurement diffraction peak: 4.6 Å, peak intensity ratio: 0.88).

Production Example 4: x = 16, Tempering Process (c2)

15 g of a triglyceride having palmitic acid residues (each having 16 carbon atoms) at positions 1 to 3 (XXX triglyceride: 89.7 mass%, tripalmitin, produced by Tokyo Chemical Industry Co., Ltd.) was maintained at 80°C for 0.5 hours and thereby completely melted. The melted triglyceride was cooled in a 30°C thermostatic chamber for 0.01 hours and then allowed to stand in a 60°C thermostatic chamber for 2 hours to form a solid with voids having an increased volume. After completion of crystallization, cooling was performed until a room temperature (25°C) condition was achieved. The obtained solid was loosened to obtain a crystalline powder composition (loose bulk density: 0.2 g/$cm^3$, aspect ratio: 2.0, average particle diameter: 87 um, X-ray diffraction measurement diffraction peak: 4.6 Å, peak intensity ratio: 0.89).

Production Example 5: x = 16, Seeding Process (c1)

First, 15 g of a triglyceride having palmitic acid residues (each having 16 carbon atoms) at positions 1 to 3 (XXX triglyceride: 89.7 mass%, tripalmitin, produced by Tokyo Chemical Industry Co., Ltd.) was maintained at 80°C for 0.5 hours and thereby completely melted. The melted triglyceride was cooled in a thermostatic chamber at 60°C until the product temperature had reached 60°C. Then, the tripalmitin fat and/or oil powder was added in an amount of 0.1 mass% to a raw material fat and/or oil. The resulting mixture was allowed to stand in the thermostatic chamber at 60°C for 2 hours to form a solid with voids having an increased volume. After completion of crystallization, cooling was performed until a room temperature (25°C) condition was achieved. The obtained solid was loosened to obtain a powdered crystalline composition (loose bulk density: 0.2 g/$cm^3$, aspect ratio: 2.0, average particle diameter: 92 um, X-ray diffraction measurement diffraction peak: 4.6 Å, peak intensity ratio: 0.89).

Production Example 6: x = 18

3 g of a triglyceride having stearic acid residues (each having 18 carbon atoms) at positions 1 to 3 (XXX triglyceride: 99.6 mass%, tristearin, produced by Sigma-Aldrich Corporation) was maintained at 80°C for 0.5 hours and thereby completely melted. The melted triglyceride was cooled in a thermostatic chamber at 60°C for 12 hours to obtain a solid with voids having an increased volume. After completion of crystallization, cooling was performed until a room temperature (25°C) condition was achieved. The obtained solid was loosened to obtain a crystalline powder composition (loose bulk density: 0.2 g/$cm^3$, aspect ratio: 2.0, average particle diameter: 30 um, X-ray diffraction measurement diffraction peak: 4.6 Å, peak intensity ratio: 0.93).

Production Example 7: x = 18

25 g of a triglyceride having stearic acid residues (each having 18 carbon atoms) at positions 1 to 3 (XXX triglyceride: 96.0 mass%, tristearin, produced by Tokyo Chemical Industry Co., Ltd.) was maintained at 80°C for 0.5 hours and thereby completely melted. The melted triglyceride was cooled in a thermostatic chamber at 55°C for 12 hours to form a solid with voids having an increased volume. After completion of crystallization, cooling was performed until a room temperature (25°C) condition was achieved. The obtained solid was loosened to obtain a powdered crystalline composition (loose bulk density: 0.2 g/$cm^3$, aspect ratio: 2.0, average particle diameter: 31 pm, X-ray diffraction measurement diffraction peak: 4.6 Å, peak intensity ratio: 0.88).

Production Example 8: x = 18

25 g of a triglyceride having stearic acid residues (each having 18 carbon atoms) at positions 1 to 3 (XXX triglyceride: 79.1 mass%, highly hydrogenated rapeseed oil, produced by Yokozeki Oil & Fat Industries Co., Ltd.) was maintained at 80°C for 0.5 hours and thereby completely melted. The melted triglyceride was cooled in a thermostatic chamber at 55°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 1.6, average particle diameter: 54 um, X-ray diffraction measurement diffraction peak: 4.6 Å, peak intensity ratio: 0.89).

Production Example 9: x = 18

25 g of a triglyceride having stearic acid residues (each having 18 carbon atoms) at positions 1 to 3 (XXX triglyceride: 66.7 mass%, highly hydrogenated soybean oil, produced by Yokozeki Oil & Fat Industries Co., Ltd.) was maintained at 80°C for 0.5 hours and thereby completely melted. The melted triglyceride was cooled in a thermostatic chamber at 55°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.3 g/cm$^3$, aspect ratio: 1.4, average particle diameter: 60 μm, X-ray diffraction measurement diffraction peak: 4.6 Å, peak intensity ratio: 0.91).

Production Example 10: x = 18

A triglyceride having stearic acid residues (each having 18 carbon atoms) at positions 1 to 3 (XXX triglyceride: 84.1 mass%, Nisshin sunflower seed oil (S) (high oleic sunflower seed oil), produced by The Nisshin OilliO Group, Ltd.) was completely hydrogenated by a usual method to obtain a hydrogenated triglyceride (XXX triglyceride: 83.9 mass%). 25 g of the obtained highly hydrogenated oil of the high oleic sunflower seed oil was maintained at 80°C for 0.5 hours and thereby completely melted. The melted triglyceride was cooled in a thermostatic chamber at 55°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 1.6, average particle diameter: 48 um, X-ray diffraction measurement diffraction peak: 4.6 Å, peak intensity ratio: 0.89).

Production Example 11: x = 18

First, 18.75 g of a triglyceride having stearic acid residues (each having 18 carbon atoms) at positions 1 to 3 (XXX triglyceride: 66.7 mass%, highly hydrogenated soybean oil, produced by Yokozeki Oil & Fat Industries Co., Ltd.) was mixed with 6.25 g of another triglyceride having stearic acid residues (each having 18 carbon atoms) at positions 1 to 3 (XXX triglyceride: 11.1 mass%, highly hydrogenated palm oil, produced by Yokozeki Oil & Fat Industries Co. Ltd.) to obtain a raw material fat and/or oil (XXX triglyceride: 53.6 mass%). The raw material fat and/or oil was maintained at 80°C for 0.5 hours and thereby completely melted. The melted triglyceride was cooled in a thermostatic chamber at 55°C for 12 hours to thereby obtain a solid with voids having an increased volume. After completion of crystallization, cooling was performed until a room temperature (25°C) condition was achieved. The obtained solid was loosened to obtain a crystalline powder composition (loose bulk density: 0.3 g/cm$^3$, aspect ratio: 1.4, average particle diameter: 63 μm, X-ray diffraction measurement diffraction peak: 4.6 Å, peak intensity ratio: 0.78). The highly hydrogenated palm oil, which had a very low XXX triglyceride content, was used as a diluent component (the same applied hereinafter).

Production Example 12: x = 18, Seeding Process (c1)

25 g of a triglyceride having stearic acid residues (each having 18 carbon atoms) at positions 1 to 3 (XXX triglyceride: 96.0 mass%, tristearin, produced by Tokyo Chemical Industry Co., Ltd.) was maintained at 80°C for 0.5 hours and thereby completely melted. The melted triglyceride was cooled in a thermostatic chamber at 70°C until the product temperature had reached 70°C. A tristearin fat and/or oil powder was then added in an amount of 0.1 mass% to the raw material fat and/or oil and the resulting mixture was allowed to stand in a thermostatic chamber at 70°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 2.0, average particle diameter: 36 μm, X-ray diffraction measurement diffraction peak: 4.6 Å, peak intensity ratio: 0.88).

Production Example 13: x = 18, Tempering Process (c2)

15 g of a triglyceride having stearic acid residues (each having 18 carbon atoms) at positions 1 to 3 (XXX triglyceride: 79.1 mass%, highly hydrogenated rapeseed oil, produced by Yokozeki Oil & Fat Industries Co., Ltd.) was maintained at 80°C for 0.5 hours and thereby completely melted. The melted triglyceride was cooled in a thermostatic chamber at 50°C for 0.1 hours and then allowed to stand in a thermostatic chamber at 65°C for 6 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 1.6, average particle diameter: 50 $\mu$m, X-ray diffraction measurement diffraction peak: 4.6 Å, peak intensity ratio: 0.90).

Production Example 14: x = 18, Tempering Process (c2)

15 g of a triglyceride having stearic acid residues (each having 18 carbon atoms) at positions 1 to 3 (XXX triglyceride: 79.1 mass%, highly hydrogenated rapeseed oil, produced by Yokozeki Oil & Fat Industries Co., Ltd.) was maintained at 80°C for 0.5 hours and thereby completely melted. The melted triglyceride was cooled in a thermostatic chamber at 40°C for 0.01 hours and then allowed to stand in a thermostatic chamber at 65°C for 2 hours to form a solid with voids having an increased volume. After completion of crystallization, cooling was performed until a room temperature (25°C) condition was achieved. The obtained solid was loosened to obtain a powdered crystalline composition (loose bulk density: 0.2 g/cm$^3$, aspect ratio: 1.6, average particle diameter: 52 um, X-ray diffraction measurement diffraction peak: 4.6 Å, peak intensity ratio: 0.89).

Production Example 15: x = 18, Pre-Cooling Process (c3)

25 g of a triglyceride having stearic acid residues (each having 18 carbon atoms) at positions 1 to 3 (XXX triglyceride: 79.1 mass%, highly hydrogenated rapeseed oil, produced by Yokozeki Oil & Fat Industries Co., Ltd.) was maintained at 80°C for 0.5 hours and thereby completely melted. The raw material fat and/or oil was maintained in a thermostatic chamber at 70°C until the raw material fat and/or oil had reached 70°C and then cooled in a thermostatic chamber at 65°C for 8 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 1.6, average particle diameter: 60 $\mu$m, X-ray diffraction measurement diffraction peak: 4.6 Å, peak intensity ratio: 0.89).

Production Example 16: x = 20

10 g of a triglyceride having arachidic acid residues (each having 20 carbon atoms) at positions 1 to 3 (XXX triglyceride: 99.5 mass%, triarachidin, produced by Tokyo Chemical Industry Co., Ltd.) was maintained at 90°C for 0.5 hours and thereby completely melted. The melted triglyceride was cooled in a thermostatic chamber at 72°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 2.0, average particle diameter: 42 um, X-ray diffraction measurement diffraction peak: 4.6 Å, peak intensity ratio: 0.92).

Production Example 17: x = 22

10 g of a triglyceride having behenic acid residues (each having 22 carbon atoms) at positions 1 to 3 (XXX triglyceride: 97.4 mass%, tribehenin, produced by Tokyo Chemical Industry Co., Ltd.) was maintained at 90°C for 0.5 hours and thereby completely melted. The melted triglyceride was cooled in a thermostatic chamber at 79°C for 12 hours to form a solid with voids having an increased volume. After completion of crystallization, cooling was performed until a room temperature (25°C) condition was achieved. The obtained solid was loosened to obtain a crystalline powder composition (loose bulk density: 0.2 g/cm$^3$, aspect ratio: 2.0, average particle diameter: 52 $\mu$m, X-ray diffraction measurement diffraction peak: 4.6 Å, peak intensity ratio: 0.93).

Production Example 18: x = 16, 18

12.5 g of a triglyceride having palmitic acid residues (each having 16 carbon atoms) at positions 1 to 3 (XXX triglyceride: 89.7 mass%, tripalmitin, produced by Tokyo Chemical Industry Co., Ltd.) was mixed with 12.5 g of a triglyceride having stearic acid residues (each having 18 carbon atoms) at positions 1 to 3 (XXX triglyceride: 96.0 mass%,

tristearin, produced by Tokyo Chemical Industry Co., Ltd.) to prepare a raw material fat and/or oil (XXX triglyceride: 93.8%). The raw material fat and/or oil was maintained at 80°C for 0.5 hours and thereby completely melted. The melted raw material was cooled in a thermostatic chamber at 55°C for 16 hours to obtain a solid with voids having an increased volume. The obtained solid was loosened to obtain a crystalline powder composition (loose bulk density: 0.2 g/cm$^3$, aspect ratio: 1.6, average particle diameter: 74 μm, X-ray diffraction measurement diffraction peak: 4.6 Å, peak intensity ratio: 0.90).

Production Example 19: x = 16, 18

12.5 g of a triglyceride having palmitic acid residues (each having 16 carbon atoms) at positions 1 to 3 (XXX triglyceride: 69.9 mass%, hard palm stearin, produced by The Nisshin OilliO Group, Ltd.) was mixed with 12.5 g of a triglyceride having stearic acid residues (each having 18 carbon atoms) at positions 1 to 3 (XXX triglyceride: 79.1 mass%, highly hydrogenated rapeseed oil, produced by Yokozeki Oil & Fat Industries Co., Ltd.) to prepare a raw material fat and/or oil (XXX triglyceride: 75.3%). The raw fat and/or oil material was maintained at 80°C for 0.5 hours and thereby completely melted. The melted raw material was cooled in a thermostatic chamber at 55°C for 16 hours to form a solid with voids having an increased volume. The obtained solid was then loosened to obtain a crystalline powder composition (loose bulk density: 0.3 g/cm$^3$, aspect ratio: 1.4, average particle diameter: 77 μm, X-ray diffraction measurement diffraction peak: 4.6 Å, peak intensity ratio: 0.88).

## Claims

1. A fat and/or oil composition containing 3-hydroxybutyric acid, the composition comprising 3-hydroxybutyric acid and/or a salt of 3-hydroxybutyric acid, edible fat and/or oil, and a protein product.

2. The fat and/or oil composition containing 3-hydroxybutyric acid according to claim 1, wherein the edible fat and/or oil is a fat and/or oil particle containing a fat and/or oil component comprising at least one type of XXX triglyceride having a fatty acid residue X at positions 1 to 3 of glycerin.

3. The fat and/or oil composition containing 3-hydroxybutyric acid according to claim 2, wherein the fat and/or oil component comprises β-form fat and/or oil.

4. The fat and/or oil composition containing 3-hydroxybutyric acid according to claim 2 or 3, wherein the number of carbon atoms of the fatty acid residue is an integer of 10 to 22.

5. The fat and/or oil composition containing 3-hydroxybutyric acid according to any one of claims 2 to 4, wherein the fat and/or oil particle has a plate-like shape.

6. The fat and/or oil composition containing 3-hydroxybutyric acid according to any one of claims 1 to 5, wherein the edible fat and/or oil is present in an amount of 0.5 to 200 parts by mass per 100 parts by mass of the 3-hydroxybutyric acid and/or salt of 3-hydroxybutyric acid.

7. The fat and/or oil composition containing 3-hydroxybutyric acid according to any one of claims 1 to 6, wherein the protein product is at least one member selected from the group consisting of whey protein, casein protein, soy protein, pea protein, wheat protein, egg protein, and rice protein.

8. The fat and/or oil composition containing 3-hydroxybutyric acid according to any one of claims 1 to 7, wherein the protein product is present in an amount of 30 to 2000 parts by mass per 100 parts by mass of the 3-hydroxybutyric acid and/or salt of 3-hydroxybutyric acid.

9. The fat and/or oil composition containing 3-hydroxybutyric acid according to any one of claims 1 to 8, wherein the salt of 3-hydroxybutyric acid is at least one member selected from the group consisting of alkali metal salts of 3-hydroxybutyric acid, alkaline earth metal salts of 3-hydroxybutyric acid, and ammonium salts of 3-hydroxybutyric acid.

10. The fat and/or oil composition containing 3-hydroxybutyric acid according to any one of claims 1 to 9, wherein the 3-hydroxybutyric acid and/or salt of 3-hydroxybutyric acid has a three-dimensional structure that is an R configuration.

11. The fat and/or oil composition containing 3-hydroxybutyric acid according to any one of claims 1 to 10, which is for

use in oral intake.

**12.** The fat and/or oil composition containing 3-hydroxybutyric acid according to any one of claims 1 to 11, which is in the form of an aqueous dispersion.

**13.** The fat and/or oil composition containing 3-hydroxybutyric acid according to any one of claims 1 to 11, which is in the form of a solid.

**14.** A method for producing the fat and/or oil composition containing 3-hydroxybutyric acid of any one of claims 1 to 13, the method comprising the step of (1) mixing the 3-hydroxybutyric acid and/or salt of 3-hydroxybutyric acid, the edible fat and/or oil, and the protein product.

**15.** The method according to claim 14,

wherein the step (1) is performed in water and
the method further comprises the step of (2) removing water from the fat and/or oil composition containing 3-hydroxybutyric acid in the form of an aqueous dispersion obtained in step (1) to isolate a solid fat and/or oil composition containing 3-hydroxybutyric acid.

**16.** The method according to claim 15, wherein the water is removed by freeze-drying.

**17.** A nutritional supplementary food comprising the fat and/or oil composition containing 3-hydroxybutyric acid of any one of claims 1 to 13.

**18.** A method for improving water dispersibility of a fat and/or oil composition containing 3-hydroxybutyric acid, the composition comprising 3-hydroxybutyric acid or a salt of 3-hydroxybutyric acid, the method comprising mixing the 3-hydroxybutyric acid and/or salt of 3-hydroxybutyric acid, edible fat and/or oil, and a protein product.

Fig. 1

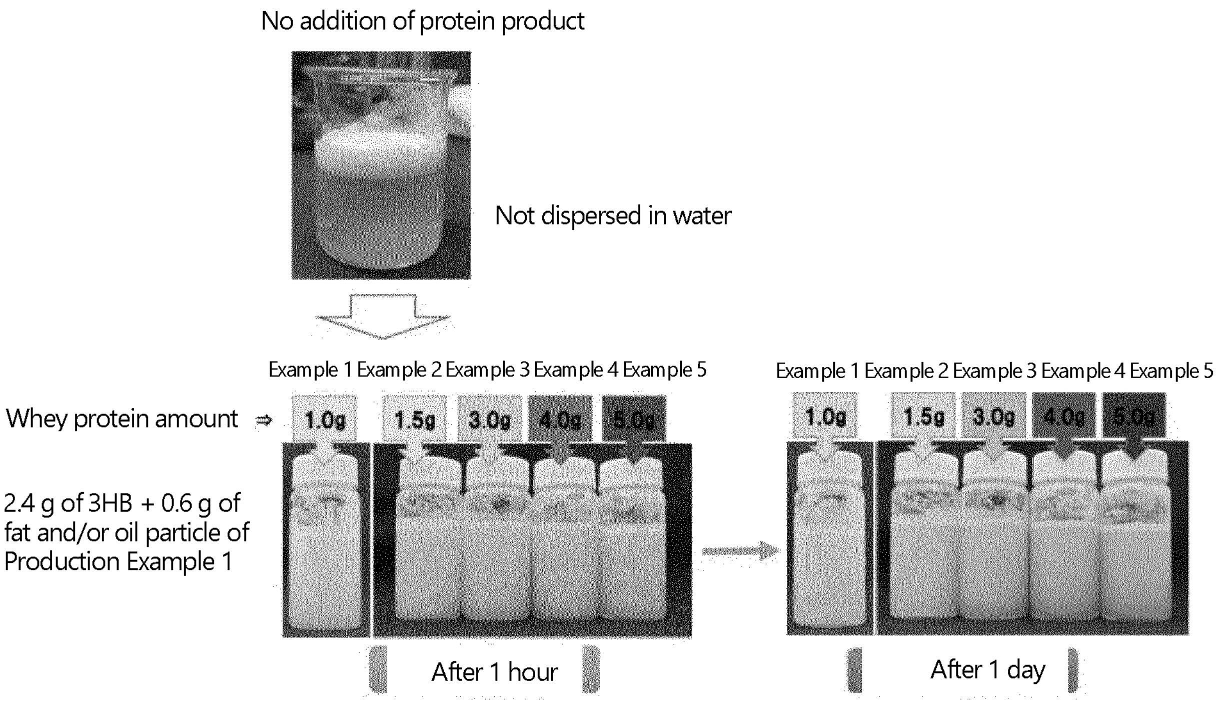
No addition of protein product
Not dispersed in water
Example 1 Example 2 Example 3 Example 4 Example 5
Whey protein amount ⇒
1.0g 1.5g 3.0g 4.0g 5.0g
2.4 g of 3HB + 0.6 g of fat and/or oil particle of Production Example 1
After 1 hour
Example 1 Example 2 Example 3 Example 4 Example 5
1.0g 1.5g 3.0g 4.0g 5.0g
After 1 day

Fig. 2

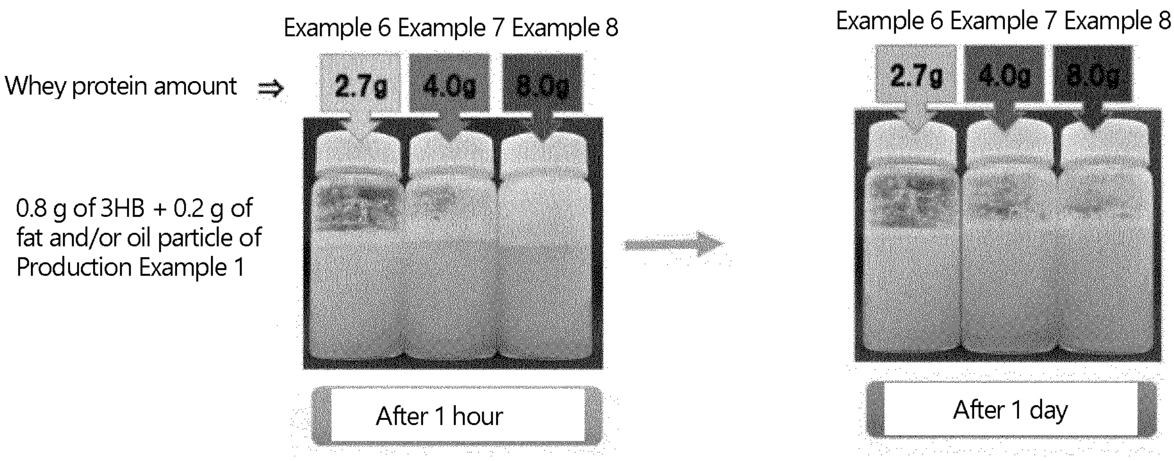
Example 6 Example 7 Example 8
Whey protein amount ⇒
2.7g 4.0g 8.0g
0.8 g of 3HB + 0.2 g of fat and/or oil particle of Production Example 1
After 1 hour
Example 6 Example 7 Example 8
2.7g 4.0g 8.0g
After 1 day

Fig. 3

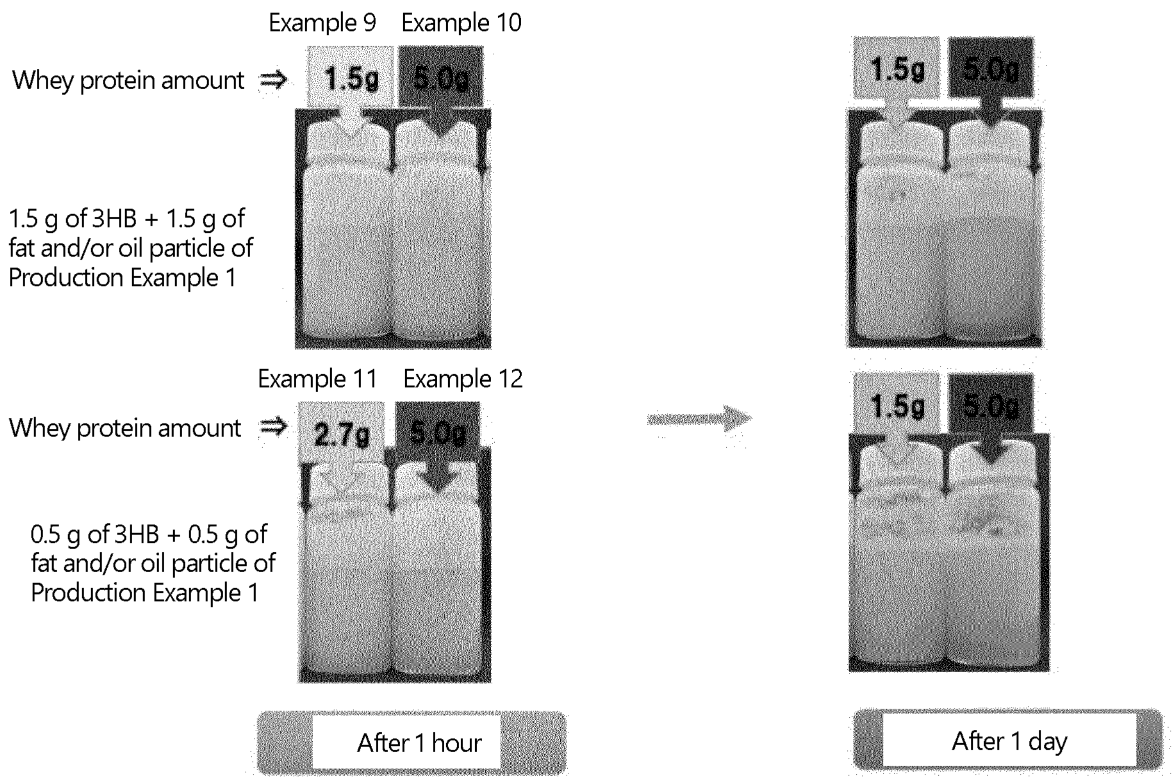
Example 9 Example 10
Whey protein amount ⇒
1.5g
5.0g
1.5 g of 3HB + 1.5 g of fat and/or oil particle of Production Example 1
Example 11 Example 12
Whey protein amount ⇒
2.7g
5.0g
0.5 g of 3HB + 0.5 g of fat and/or oil particle of Production Example 1
After 1 hour
1.5g
5.0g
1.5g
5.0g
After 1 day

Fig. 4

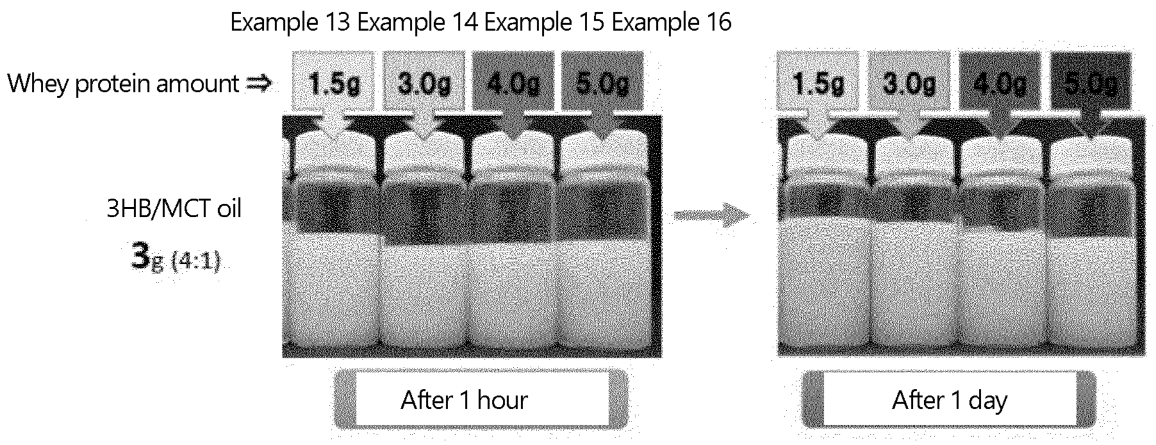
Example 13 Example 14 Example 15 Example 16
Whey protein amount ⇒
1.5g
3.0g
4.0g
5.0g
3HB/MCT oil
3g (4:1)
After 1 hour
1.5g
3.0g
4.0g
5.0g
After 1 day

Fig. 5

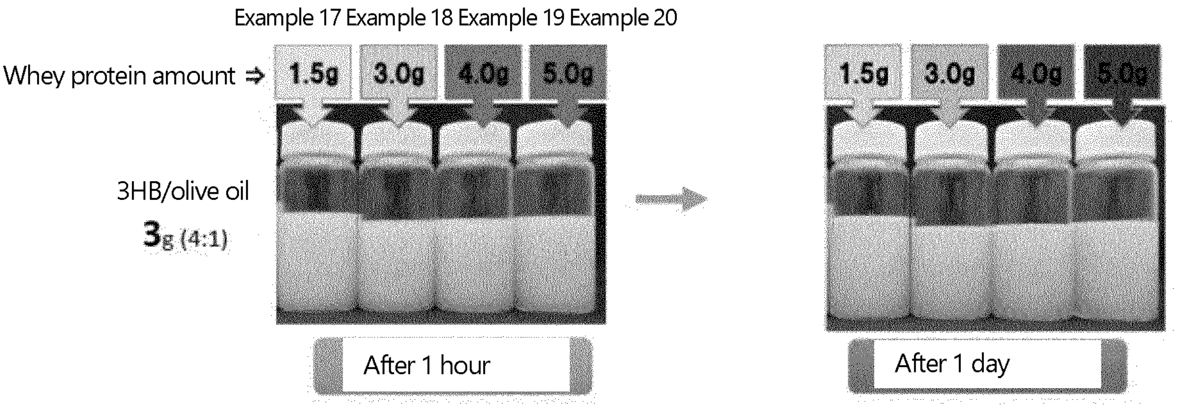
Example 17 Example 18 Example 19 Example 20
Whey protein amount ⇒
1.5g
3.0g
4.0g
5.0g
3HB/olive oil
3g (4:1)
After 1 hour
1.5g
3.0g
4.0g
5.0g
After 1 day

Fig. 6

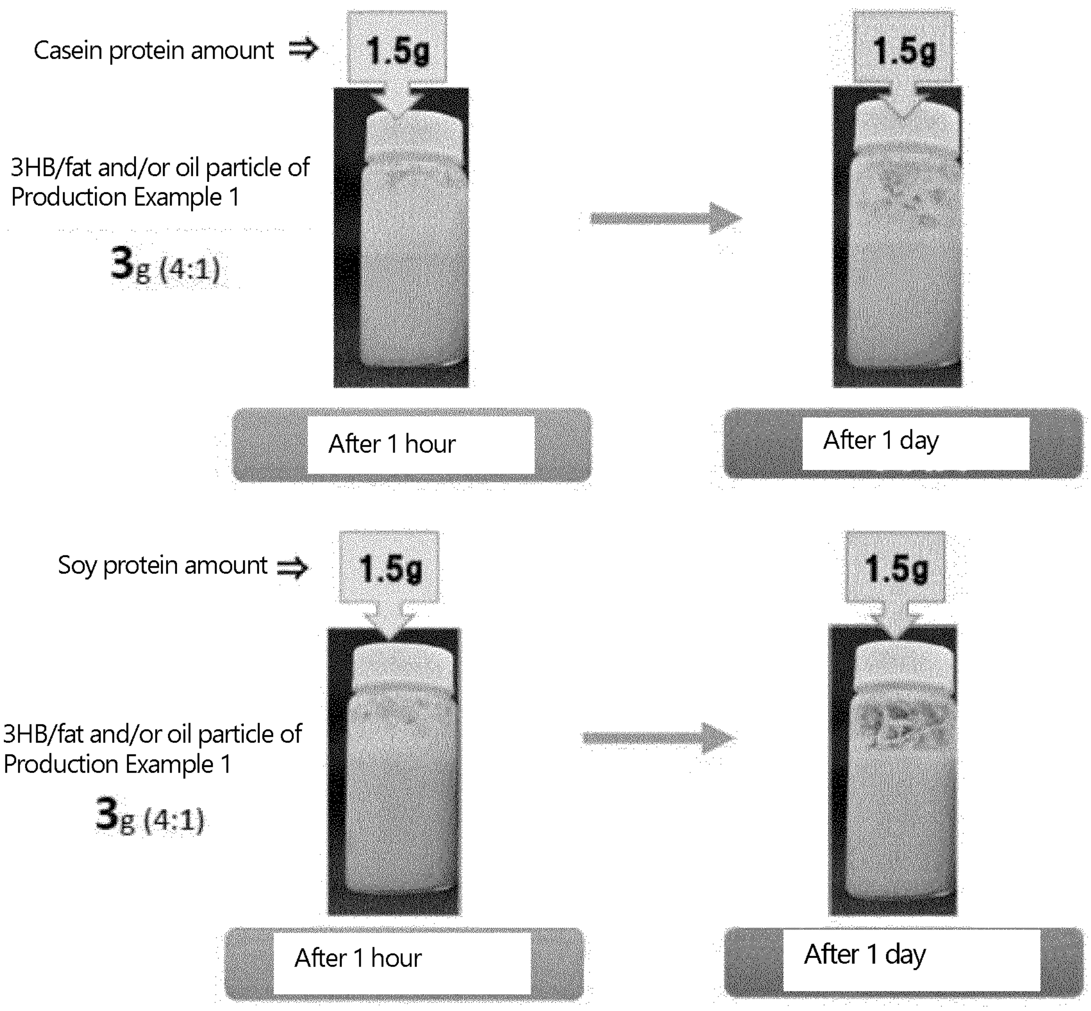
Casein protein amount ⇒
1.5g
3HB/fat and/or oil particle of Production Example 1
3g (4:1)
After 1 hour
1.5g
After 1 day
Soy protein amount ⇒
1.5g
3HB/fat and/or oil particle of Production Example 1
3g (4:1)
After 1 hour
1.5g
After 1 day

Fig. 7

Comparative Example 2
No emulsifier

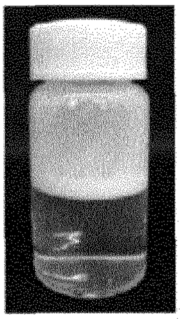

Amount added 0mg

Comp. Ex. 3 Comp. Ex. 7
Poem SSL-100

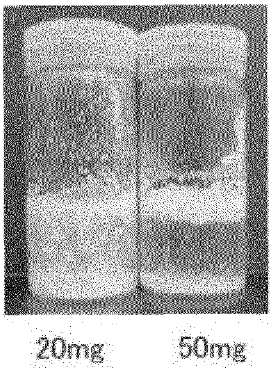

20mg 50mg

Comp. Ex. 4 Comp. Ex. 8
Lecion P

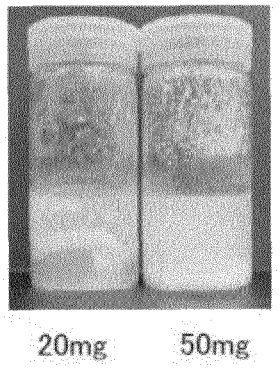

20mg 50mg

Comp. Ex. 5 Comp. Ex. 9
Emulsy MS

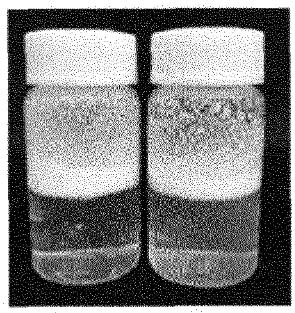

Amount added 20mg 50mg

Comp. Ex. 6 Comp. Ex. 10
Poem B-30

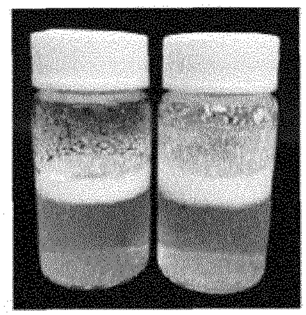

20mg 50mg

Fig. 8

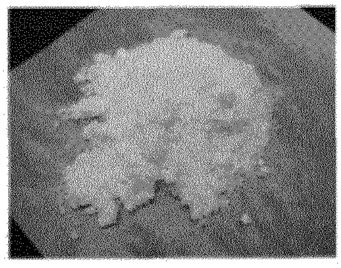

Example 23
(2.4 g of 3HB + 0.6 g of fat and/or oil particle of Production Example 1 + 3 g of whey protein)

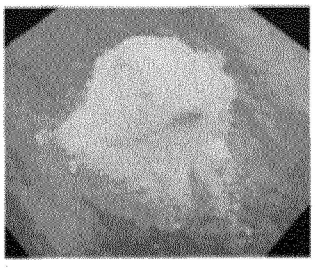

Example 24
(2.4 g of 3HB + 0.6 g of fat and/or oil particle of Production Example 1 + 12 g of whey protein)

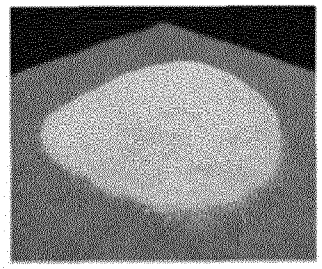

Example 25
(1.5 g of 3HB + 1.5 g of fat and/or oil particle of Production Example 1 + 8 g of whey protein)

## INTERNATIONAL SEARCH REPORT

International application No.
**PCT/JP2021/047689**

**A. CLASSIFICATION OF SUBJECT MATTER**

***A23D 7/005***(2006.01)i; ***A23L 33/12***(2016.01)i
FI: A23D7/005; A23L33/12

According to International Patent Classification (IPC) or to both national classification and IPC

**B. FIELDS SEARCHED**

Minimum documentation searched (classification system followed by classification symbols)

A23L33/12; A23D7/005

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-103214 A (NOF CORP) 09 July 2020 (2020-07-09) | 1-18 |
| A | WO 2017/051910 A1 (NISSHIN OILLIO GROUP LTD) 30 March 2017 (2017-03-30) | 1-18 |
| P, A | WO 2021/241351 A1 (OSAKA GAS CO LTD) 02 December 2021 (2021-12-02) | 1-18 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 January 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/047689**

| Patent document cited in search report | Publication date (day/month/year) | Patent family member(s) | Publication date (day/month/year) |
|---|---|---|---|
| JP 2020-103214 A | 09 July 2020 | (Family: none) | |
| WO 2017/051910 A1 | 30 March 2017 | US 2018/0249729 A1<br>EP 3354138 A1 | |
| WO 2021/241351 A1 | 02 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019176839 A


### Non-patent literature cited in the description


- **NISSIM GARTI et al.** Crystallization and Polymorphism of Fats and Fatty Acids. Marcel Dekker Inc, 1988, 32-33